# EUROPEAN PATENT APPLICATION

(11) **EP 2 749 353 A1**
(43) Date of publication of application: **02.07.2014**
(21) Application number: 12827714.2
(22) Date of filing: 24.08.2012
(51) Int. Cl.: B01J 27/224, B01D 39/14, B01D 39/20, B01D 53/94, B01J 35/10, F01N 3/022, F01N 3/023, F01N 3/035, F01N 3/10

(54) **EXHAUST PURIFICATION CATALYST, EXHAUST GAS PURIFIER OF INTERNAL COMBUSTION ENGINE, AND EXHAUST GAS PURIFICATION FILTER**

(30) Priority: 26.08.2011 JP 2011185047; 26.08.2011 JP 2011185048; 19.06.2012 JP 2012137913; 19.06.2012 JP 2012137914
(71) Applicant: Sumitomo Osaka Cement Co., Ltd., Tokyo 102-8465 (JP)
(72) Inventor: TANAKA, Masamichi, Tokyo 102-8465 (JP); HIDAKA, Nobuhiro, Tokyo 102-8465 (JP); HANAMURA, Katsunori, Tokyo 102-8465 (JP)
(74) Representative: Cabinet Laurent & Charras
(86) International application number: PCT/JP2012/071430
(87) International publication number: WO 2013/031682

(57) **Abstract**

Provided are an exhaust purification catalyst which purifies an exhaust gas discharged from an internal combustion engine and in which high catalytic activity at a low temperature and high durability at a high temperature are compatible with each other, and an exhaust emission control device for the internal combustion engine in which the exhaust purification catalyst is used. The exhaust purification catalyst is a catalyst in which a noble metal particle is carried on a surface of a silicon carbide particle. The catalyst is a noble-metal-carrying silicon carbide particle (1) in which a noble metal particle (3) is carried on a surface of a silicon carbide particle (2) in a state of being coated with an oxide layer (4).

## Description

### Technical Field

The present invention relates to an exhaust purification catalyst that purifies an exhaust gas discharged from an internal combustion engine, to an exhaust emission control device for an internal combustion engine in which the exhaust purification catalyst is disposed in an exhaust passage of the internal combustion engine, more particularly, to an exhaust purification catalyst that efficiently purifies carbon monoxide (CO), hydrocarbon (HC), nitrogen oxide (NOₓ), particulate matter (PM), and the like which are contained in an exhaust gas discharged from the internal combustion engine of an engine and the like, and to an exhaust emission control device for an internal combustion engine in which the exhaust purification catalyst is disposed in the exhaust passage.

In addition, the invention relates to an exhaust gas purification filter that is very suitable for removing particulate matter from the exhaust gas discharged from an diesel engine of a vehicle, and the like, and more particularly, to an exhaust gas purification filter which prevents an increase in pressure loss while improving particulate matter trapping properties, and which lowers the combustion temperature of the particulate matter during regeneration of the filter, thereby realizing improvement in durability and continuous regeneration of the filter.

Priority is claimed on Japanese Patent Application No. 2011-185048, filed August 26, 2011, Japanese Patent Application No. 2012-137914, filed June 19, 2012, Japanese Patent Application No. 2011-185047, filed August 26, 2011, and Japanese Patent Application No. 2012-137913, filed June 19, 2012, the contents of which are incorporated herein by reference.

### Background Art

Various substances such as carbon monoxide (CO), hydrocarbon (HC), nitrogen oxide (NOx), and particulate matter (PM), which are contained in an exhaust gas discharged from an engine (internal combustion engine) of a vehicle and the like, are the cause of air pollution, and have caused various environmental problems until recently. Therefore, an exhaust emission control device, which uses a noble metal element as a catalyst, is used to purify the substances included in the exhaust gas that are the cause of air pollution.

In the exhaust emission control devices of the related art, ceramics formed from a metal oxide such as alumina, ceria, and zirconia, or a metal composite oxide having a perovskite structure expressed by General Formula ABO₃ (provided that, A and B represent metal elements) are used as a catalyst carrier, and a material in which a noble metal element having a catalyst performance is carried on the catalyst carrier is used as the catalyst. The substances contained in the exhaust gas are brought into contact with the catalyst to perform a decomposition treatment (for example, PTL 1).

In addition, the particulate matter (PM), which is included in the exhaust gas discharged from a vehicle engine, particularly, a diesel engine, is believed to be a cause of allergic diseases such as asthma and hay fever.

In general, in a diesel engine for a vehicle, a diesel particulate filter (DPF) having a sealed-type honeycomb structure formed from ceramics is used as an exhaust gas purification filter that traps the particulate matter. In the DPF, both ends of a cell (gas flow passage) of the honeycomb structure formed from the ceramics are sealed with a checkered pattern, and when an exhaust gas passes through pores in a partition wall of the cell, the PM is trapped (for example, refer to PTL 2 and PTL 3).

However, the PM is always discharged from the engine as the vehicle travels, and thus the PM is deposited in a layer shape in and over the pores of the partition wall of the DPF.

Additionally, when the vehicle travels, a pressure loss of the DPF increases due to the deposition of the PM, and thus a load affects the travelling vehicle. Accordingly, it is necessary to periodically remove the PM that is deposited in the DPF by using certain means to regenerate the DPF. In the related art, in a case where the pressure loss of the DPF increases, a high-temperature exhaust gas is allowed to flow to DPF to combust the PM that is deposited, thereby regenerating the DPF. However, in this regeneration method, the PM that is deposited is combusted at a high temperature of 600°C to 700°C, and at an initial stage of the regeneration, the PM is combusted at a further higher temperature. Therefore, the partition wall of the DPF tends to be broken due to a thermal stress that occurs during the combustion. Accordingly, it is necessary to decrease the thermal stress that occurs during combustion of the PM to prevent the partition wall from breaking.

With regard to the DPF, an exhaust gas purification filter, in which a filter formed from a porous substance of silicon carbide is formed on the partition wall of the DPF to prevent an increase in pressure loss and to decrease the thermal stress while improving the particulate matter trapping properties, is suggested. According to this DPF, abrupt combustion at an initial stage is prevented, and thus a rapid temperature increases in the DPF is prevented, thereby preventing the DPF from breaking (PTL 4).

However, in this method, the PM, which is trapped by surface layer filtration using the porous silicon carbide filter, is heated and combusted in a uniformmanner on the porous filter, and the combustion temperature of the PM can be reduced, but it is impossible to omit a periodic DPF regeneration treatment process.

Accordingly, to omit the DPF regeneration treatment process, there is suggested a method of continuously regenerating the DPF by lowering the combustion temperature of the PM that is deposited to combust and remove the PM at an exhaust gas temperature. For example, as a DPF capable of realizing a method of efficiently combusting the PM, the following DPFs are suggested. Specifically, a DPF disclosed in PTL 5 has a structure in which a rare-earth oxide catalyst is carried on the partition wall of the DPF, and a noble metal is carried on a front part of the partition wall. In addition, a DPF disclosed in PTL 6 has a structure in which a rare-earth oxide coat layer is formed on a partition wall of the DPF, and a noble metal is carried on the rare-earth oxide coat layer. Citation List

### Patent Literature

[PTL 1] Japanese Laid-open Patent Publication No. 5-4050
[PTL 2] Japanese Laid-open Patent Publication No. 5-23512
[PTL 3] Japanese Laid-open Patent Publication No. 9-77573
[PTL 4] Pamphlet of International Publication No. WO2009/133857
[PTL 5] Japanese Laid-open Patent Publication No. 2007-253144
[PTL 6] Japanese Laid-open Patent Publication No. 2006-272288

### Summary of Invention

### Technical Problem

In general, in a case where the above-described exhaust gas is purified using the catalyst (here, the "catalyst" is assumed to contain a noble metal element having a catalytic function and a carrier. The same assumption applies through the document), heat is necessary to allow catalytic activity of the noble metal element to be exhibited. However, for example, the catalyst is at a low temperature immediately after engine starting, and thus the purification of the exhaust gas becomes insufficient. Therefore, there is a demand for stable purification of the exhaust gas even when the catalyst is at a low temperature, and thus there is a demand for a catalyst capable of realizing efficient purification performance even at a low temperature.

As a method of obtaining efficient purification performance at a low temperature, it is considered that an amount of a noble metal element that is used as the catalyst is increased to expand a contact area (contact probability) between the exhaust gas and the noble metal element. However, lots of noble metal elements such as a group 9 element and a group 10 element, which have catalytic activity for purification of the exhaust gas, are expensive, and thus there is a problem in that the manufacturing cost increases.

In addition, a configuration of using composite particles, in which the noble metal element is carried on the surface of fine particles (carrier particles) of γ-alumina and the like with a high specific surface area to increase a surface area of the noble metal element and to increase a catalytic active surface, as a catalyst is also known. In the catalyst configured described above, crystal transition from γ-alumina to α-alumina occurs at a high temperature of 1000°C or higher, and thus there is a problem in that the specific surface significantly decreases.

Further, structural change due to the crystal transition from γ-alumina to α-alumina becomes a cause of promoting sintering (grain growth) of catalyst component. In addition, in a case of forming the catalyst in a layer shape on a base material, the structural change in the catalyst due to the crystal transition becomes a cause of generating peeling-off or detachment of a layer that is formed.

As described above, it is difficult for the catalyst using the fine particles of γ-alumina and the like to maintain catalytic activity at a high temperature.

The invention has been made in consideration of the above-described circumstances, and a first object thereof is to provide an exhaust purification catalyst which purifies an exhaust gas discharged from an internal combustion engine and in which high catalytic activity at a low temperature and high durability at a high temperature are compatible with each other, and an exhaust emission control device for the internal combustion engine in which the exhaust purification catalyst is used.

In addition, with regard to the exhaust gas purification filter, in the method of continuously regenerating the DPF, which is disclosed in PTL 5 and PTL 6 of the related art, a temperature of an exhaust gas, which is discharged from the diesel engine at a typical traveling range, is as low as 150°C to 350°C, and thus a high oxidation rate is necessary at a low exhaust gas temperature range to regenerate the DPF by combusting the deposited PM in the exhaust gas. Therefore, it is necessary to increase the oxidation rate of the PM in the DPF, and thus it is necessary to increase the carried amount of the noble metal in the DPF. As a result, there is a problem in that the price of the DPF is increased.

In addition, when the carried amount of the noble metal in the DPF increases, there is a new problem in that the sintering (grain growth) of the noble metal particles is promoted, and thus the oxidation rate at a low exhaust gas temperature range decreases, and oxidation and purification performance decreases.

The invention has been made also in consideration of the above-described circumstances, and a second object thereof is to provide an exhaust gas purification filter which prevents an increase in pressure loss while improving particulate matter trapping properties, thereby realizing improvement in durability, lowering of the combustion temperature of particulate matter, and continuous regeneration of a filter.

### Solution to Problem

The present inventors have made a thorough investigation on an exhaust emission control device for an internal combustion engine. As a result, they have found that when using noble-metal-carrying silicon carbide particles in which noble metal particles, the word "particle" may be referred as "fine particle" hereinafter, having catalytic activity are carried on the surface of fine silicon carbide particles in a state of being coated with an oxide layer as a catalyst disposed in an exhaust passage of an internal combustion engine, high catalytic activity at a low temperature and high durability at a high temperature are compatible with each other, and thus they have accomplished the invention.

That is, according to an aspect of the invention, there is provided an exhaust purification catalyst in which a noble metal particle is carried on a surface of a silicon carbide particle. The noble metal particle is carried in a state of being coated with an oxide layer.

The oxide layer may be formed from one or two kinds selected from a group consisting of amorphous SiOₓ (provided that, 0<x≤3) and amorphous SiO_{y}C_{z} (provided that, 0<y≤3 and 0<z≤3).

The oxide layer may further contain one or two or more crystalline substances selected from a group consisting of SiO₂, SiO, SiOC₃, SiO₂C₂, and SiO₃C.

The average primary particle size of the silicon carbide particle may be 0.01 µm to 5 µm.

The average primary particle size of the noble metal particle may be 1 nm to 50 nm.

According to another aspect of the invention, there is provided an exhaust emission control device for an internal combustion engine, which purifies an exhaust gas discharged from an internal combustion engine by using a catalyst disposed in an exhaust passage of the internal combustion engine. At least one catalyst is the exhaust purification catalyst of the invention.

In addition, the present inventors have made a thorough investigation on a filter base body which is formed from a porous substance and constitutes the exhaust gas purification filter. As a result, they have found that when a porous film, which is formed on a surface of a partition wall that constitutes the filter base body at least on an inflow-side gas flow passage side, is constituted by silicon carbide particles, and when noble metal particles, which are carried on the surface of the silicon carbide particles, are carried in a state of being coated with an oxide layer, an increase in pressure loss is prevented while improving particulate matter trapping properties, a combustion temperature of particulate matter can be lowered, and as a result, it is possible to realize not only an improvement in durability of the filter but also continuous regeneration of the filter. From this finding, the present inventors have accomplished the invention.

According to still another aspect of the invention, there is provided an exhaust gas purification filter which purifies an exhaust gas by allowing particulate matter contained in the exhaust gas to pass through a filter base body formed from a porous substance to trap the particulate matter. The filter base body includes a partition wall that is formed from a porous substance, an inflow-side gas flow passage which is formed by the partition wall and in which an inflow-side end for an exhaust gas that contains particulate matter is opened, and an outflow-side gas flow passage which is provided at a position different from that of the inflow-side gas flow passage of the filter base body and is formed by the partition wall and in which an outflow-side end for the exhaust gas is opened. A porous film having a pore size smaller than that of the partition wall is formed on a surface of the partition wall at least on an inflow-side gas flow passage side, and the porous film contains silicon carbide particles and noble metal fine particles, and the noble metal particles, which are carried on the surface of the silicon carbide particles, are carried in a state of being coated with an oxide layer.

The oxide layer may be formed from one or two compounds selected from the group consisting of amorphous SiOₓ (provided that, 0<x≤3) and amorphous SiO_{y}C_{z} (provided that, 0<y≤3 and 0<z≤3).

The oxide layer may further contain one kind or two or more kinds of crystalline substances selected from a group consisting of SiO₂, SiO, SiOC₃, SiO₂C₂, and SiO₃C.

The average primary particle size of the silicon carbide particles may be 0.01 µm to 10 µm.

The average primary particle size of the noble metal particles may be 1 nm to 50 nm.

The average pore size of the porous film may be 0.05 µm to 3 µm, and an average porosity of the porous film may be 50% to 90%.

### Advantageous Effects of Invention

According to the exhaust purification catalyst of the invention, the noble metal particles are carried on the surface of the silicon carbide particles, and the noble metal particles are carried in a state of being coated with the oxide layer, and thus the noble metal particles are uniformly carried on the surface of the fine silicon carbide particles. In addition, the noble metal particles are carried in a state of being coated with the oxide layer, and thus it is possible to secure an effective catalytic active site. As a result, it is possible to maintain high catalytic activity at a low temperature without increasing the amount of the noble metal particles.

In addition, the fine silicon carbide particles themselves have durability at a high temperature, and the noble metal particles are carried in a state of being coated with the oxide layer, and thus even in a high-temperature environment, it is possible to maintain the same high catalytic activity as that at low temperatures.

As described above, the high catalytic activity at a low temperature and the high durability at a high temperature are compatible with each other. As a result, it is possible to maintain high durability while maintaining high catalytic activity from a low-temperature region to a high-temperature region.

According to the exhaust emission control device used in an internal combustion engine of the invention, the exhaust purification catalyst of the invention is at least one of the catalysts that is disposed in the exhaust passage of the internal combustion engine, and thus it is possible to maintain high durability while maintaining high catalytic activity from a low-temperature region to a high-temperature region. As a result, it is possible to improve the reliability of exhaust purification in the internal combustion engine.

In addition, according to the exhaust gas purification filter of the invention, the filter base body formed from the porous substance is configured to include the partition wall that is formed from the porous substance, the inflow-side gas flow passage which is formed by the partition wall and in which the inflow-side end for the exhaust gas that contains particulate matter is opened, and the outflow-side gas flow passage which is provided at a position different from that of the inflow-side gas flow passage of the filter base body and is formed by the partition wall and in which the outflow-side end for the exhaust gas is opened. In addition, the porous film having a pore size smaller than that of the partition wall is formed on the surface of the partition wall at least on the inflow-side gas flow passage side, the porous film is configured to contain the silicon carbide particles and the noble metal fine particles, and the noble metal particles, which are carried on the surface of the silicon carbide particles, are carried in a state of being coated with an oxide layer. Accordingly, an increase in pressure loss is prevented while improving PM trapping properties in the filter base body, and it is possible to lower a combustion temperature of the particulate matter. As a result, it is possible to improve the durability of the exhaust gas purification filter, and it is possible to perform continuous regeneration.

According to these effects, it is possible to provide an exhaust gas purification filter which does not apply an excessive load on an engine, does not deteriorate fuel efficiency, and has excellent characteristics.

### Brief Description of Drawings

FIG. 1 is a cross-sectional view illustrating a noble-metal-carrying silicon carbide particle that is an exhaust purification catalyst of an embodiment of the invention.
FIG. 2 is a schematic view illustrating a porous film of an embodiment of the invention.
FIG. 3 is a scanning electron microscope image (SEM image) illustrating an example of the porous film of the embodiment of the invention.
FIG. 4 is a schematic view illustrating an exhaust emission control device that is used in a test of samples of Examples and Comparative Examples of the invention.
FIG. 5 is a field-emission transmission electron microscope image (FE-TEM image) of an exhaust purification catalyst of Example 3 of the invention.
FIG. 6 is an explanatory view illustrating a structure of the exhaust purification catalyst shown in FIG. 5.
FIG. 7 is a partially broken perspective view illustrating a DPF that is an example of the exhaust gas purification filter of an embodiment of the invention.
FIG. 8 is a cross-sectional view illustrating a structure of a partition wall of the DPF that is an example of the exhaust gas purification filter of the embodiment of the invention.
FIG. 9 is a cross-sectional view illustrating an example of a structure of a porous film of the DPF that is an example of the exhaust gas purification filter of the embodiment of the invention.
FIG. 10 is a scanning electron microscope image (SEM image) of a porous film of Example 6 of the invention.
FIG. 11 is a field-emission transmission electron microscope image (FE-TEM image) of the porous film of Example 6 of the invention.
FIG. 12 is an explanatory view illustrating a structure of the porous film shown in FIG. 11.

### Description of Embodiments

### (First Embodiment)

A first embodiment for carrying out an exhaust purification catalyst and an exhaust emission control device for an internal combustion engine of the invention will be described.

In addition, this embodiment makes a description in detail for easy comprehension of the gist of the invention, and does not limit the invention unless otherwise stated.

### [Exhaust Purification Catalyst]

The exhaust purification catalyst that is an embodiment of the invention is a catalyst in which noble metal particles are carried on the surface of silicon carbide particles. The noble metal particle is carried in a state of being coated with an oxide layer.

The exhaust purification catalyst of this embodiment is suitably used to purify an exhaust gas discharged from an internal combustion engine such as a gasoline engine and a diesel engine, and may be used in vehicles such as a gasoline-powered vehicle and a diesel-powered vehicle.

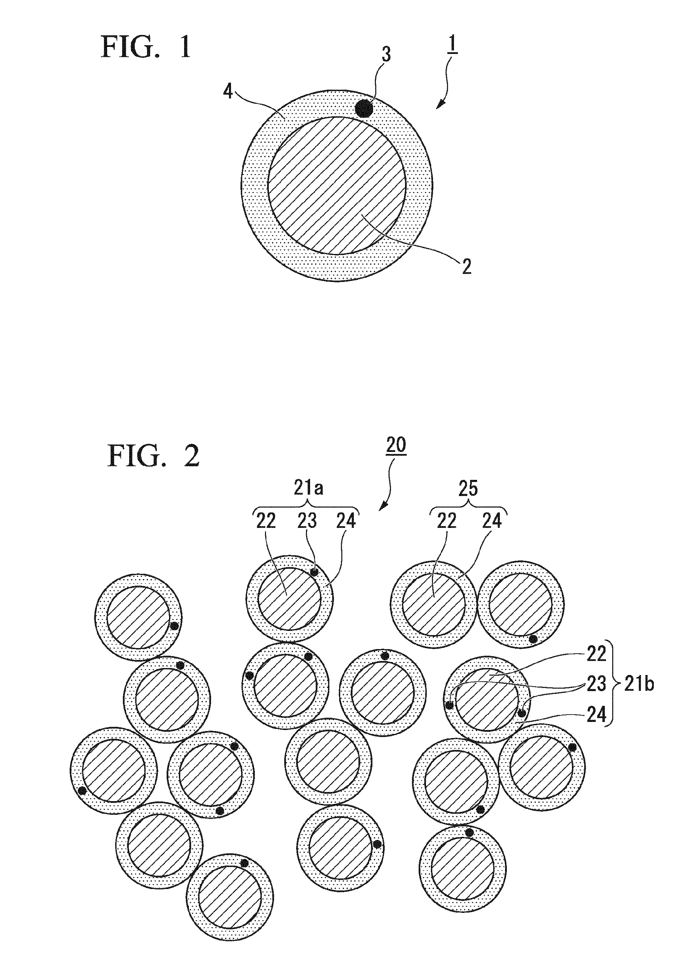

FIG. 1 is a cross-sectional view illustrating a noble-metal-carrying silicon carbide particle 1 that is a kind of exhaust purification catalyst of this embodiment. In the noble-metal-carrying silicon carbide particle 1, a noble metal particle 3 is carried on a surface of a silicon carbide particle 2, and the noble metal particle 3 is carried on the surface of the silicon carbide particle 1 in a state of being coated with an oxide layer 4.

One or two or more noble metal particles 3 may be carried on the surface of the silicon carbide particle 2.

The average primary particle size of the silicon carbide particle 2 is preferably 0.01 µm to 5 µm, is more preferably 0.02 µm to 3 µm, and is still more preferably 0.035 µm to 1 µm.

Here, in a case where the average primary particle size of the silicon carbide particles is less than 0.01 µm, when the catalyst is used at a high temperature, sintering (grain growth) between silicon carbide particles progresses and a coarse particle size is obtained, and as a result, a catalytic active site decreases, and thus this case is not preferable. On the other hand, in a case where the average primary particle size exceeds 5 µm, a specific surface area of the silicon carbide particle 2 decreases, and thus when the noble metal particles are carried, the distance between the noble metal particles is reduced. As a result, when the catalyst is used at a high temperature, sintering (grain growth) between the noble metal particles progresses, and as a result, a catalytic activity decreases, and thus this case is not preferable.

With regard to the silicon carbide particles, examples of a method of obtaining nanometer-sized particles include a thermal plasma method using thermal plasma which has a high temperature and high activity in a non-oxidizing atmosphere and which is easy for introduction to a high-speed cooling process. This manufacturing method is useful as a method of manufacturing silicon carbide nanoparticles which have an average primary particle size of approximately 5 nm to 100 nm and have excellent crystallinity. When a raw material with high purity is selected, it is possible to obtain silicon carbide nanoparticles in which the amount of impurities is very small.

In addition, a silica precursor sintering method may be an exemplary example. This method is a method of obtaining silicon carbide particles by baking a mixture of a material such as an organic silicon compound, silicon sol, and silicic acid hydrogel which contain silicon, a material such as a phenol resin which contains carbon, and a metal compound of lithium and the like which suppresses grain growth of silicon carbide.

In addition, examples of a method of obtaining silicon carbide particles having a size distribution from submicron to micron (micrometer) include industrial methods such as an Acheson process, a silica reduction method, and a silicon carbonization method. In addition, these methods are already industrially established, and thus a description thereof will not be repeated here.

The noble metal particles 3, which are carried on the surface of the silicon carbide particles 2, preferably contain one or two or more kinds of elements selected from a group consisting of platinum (Pt), gold (Au), silver (Ag), ruthenium (Ru), rhodium (Rh), palladium (Pd), osmium (Os), and iridium (Ir).

The average primary particle size of the noble metal particles 3 is preferably 1 nm to 50 nm, is more preferably 1 nm to 30 nm, and is still more preferably 1 nm to 10 nm.

Here, the reason as to why the average primary particle size is limited to 1 nm to 50 nm is as follows. When the average primary particle size is less than 1 nm, the particle size is too small and thus surface activity becomes too strong. Therefore, agglomeration tends to occur, and thus this range is not preferable. On the other hand, when the average primary particle size exceeds 50 nm, the noble metal particles are not coated with the oxide layer that is present on a surface of each of the silicon carbide particles, and thus the noble metal particles protrude from the oxide layer toward the outside. As a result, there is a concern that catalytic characteristics deteriorate, and the catalytic activity at a low temperature decreases, and thus this range is not preferable.

It is preferable that the oxide layer 4 be an oxide layer which allows the noble metal particle 3 to be carried on the surface of the silicon carbide particles 2 and which is generated on the noble metal particles 3 and the silicon carbide particles 2 through oxidation in an oxidizing atmosphere.

The oxide layer 4 has a function of maintaining the noble metal particles 3 on the surface of the silicon carbide particles 2. Accordingly, the oxide layer 4 suppresses migration of the noble metal particles 3 under a high-temperature environment, and can prevent a decrease in surface area due to sintering of the noble metal particles 3.

It is preferable that the oxide layer 4 be formed from one or two kinds substances selected from a group consisting of amorphous SiOₓ (provided that, 0<x≤3) and amorphous SiO_{y}C_{z} (provided that, 0<y≤3 and 0<z≤3). In addition, it is not necessary for amorphous SiOₓ and amorphous SiO_{y}C_{z} to have a single composition, and at each portion of the oxide layer 4, x, y, and z may vary in the above-described range in an arbitrary manner. Further, the oxide layer may further contain one or two or more crystalline substances selected from a group consisting of SiO₂ (silica), SiO, SiOC₃, SiO₂C₂, and SiO₃C.

However, the oxide layer 4 has a too small thickness and is contained in a trace amount, and thus it is difficult to confirm whether or not a crystalline substance is contained in the oxide layer 4. In addition, in the following description, substances that form the oxide layer 4 may be collectively described as "oxides of silicon carbide."

In the oxides of silicon carbide, it is preferable to contain a silicon carboxide that tends to form a bond with each of the noble metal particles 3, in other words, a compound that contains silicon, carbon, and oxygen in combination with each other. When the silicon carboxide forms a bond with the noble metal particle 3, migration of the noble metal particle 3 is suppressed, and thus the sintering prevention effect is further improved. In addition, it is known that the melting point of the noble metal particle 3 becomes lowered from miniaturization. However, when the silicon carboxide forms a bond with the noble metal particle 3, melting of the noble metal particle 3 can be prevents.

Examples of the silicon carboxide include crystalline SiOC₃, SiO₂C₂, and SiO₃C in addition to amorphous SiO_{y}C_{z} (provided that, 0<y≤3 and 0<z≤3). In addition, the silicon carboxide may contain silicon, carbon, and oxygen in combination with each other, and may include a composition other than the above-described composition.

In addition, it is known that the oxides of silicon carbide which constitute the oxide layer 4 exhibit oxygen release. It is considered that the noble metal particle 3 that is carried promotes an increase in an oxygen release amount in the oxides of silicon carbide and lowering of an oxygen release temperature. Accordingly, even in a low temperature region in which a reaction rate of a catalytic reaction depends on the number of active sites, oxygen released from the oxides of silicon carbide tends to act as the active site due to an auxiliary operation of the noble metal particle. As a result, high combustion catalytic activity can be obtained, and thus it is considered that PM combustion properties in a low-temperature region are improved.

### [Exhaust Emission Control Device for Internal Combustion Engine]

An exhaust emission control device for an internal combustion engine, which is an embodiment of the invention, is an exhaust emission control device which purifies an exhaust gas discharged from an internal combustion engine by using a catalyst disposed in an exhaust passage of the internal combustion engine. At least one catalyst is the exhaust purification catalyst of this embodiment.

The exhaust emission control device for an internal combustion engine of this embodiment is used in vehicles such as a gasoline-powered vehicle and a diesel-powered vehicle. In addition, the exhaust purification catalyst may be disposed in the exhaust passage, and a disposition method thereof is not particularly limited. For example, the exhaust purification catalyst may be disposed in the exhaust passage in a state of being carried on a catalyst carrying member such as a honeycomb member for exhaust purification, which is used in a vehicle (a gasoline-powered vehicle and a diesel-powered vehicle), and a DPF for a diesel-powered vehicle.

The exhaust purification catalyst in this embodiment is preferably formed and disposed on a base material provided in the exhaust passage as a porous layer that contains a plurality of noble-metal-carrying silicon carbide particles 1. Here, the porous layer is intended to include not only a porous film, which is a continuous film-shaped structure, but also a porous agglomerate.

The noble-metal-carrying silicon carbide particles 1 may be in a state capable of exhibiting a function as a catalyst, and the noble-metal-carrying silicon carbide particles 1 may be in a state of being dispersed in the porous layer. Several noble-metal-carrying silicon carbide particles 1 may be disposed in the porous layer in an agglomerated state. In addition, several noble-metal-carrying silicon carbide particles 1 may agglomerate and form a continuous film-shape structure or a porous agglomerate shape may be formed. Any case is called a catalyst layer. In addition, in addition to the noble-metal-carrying silicon carbide particles 1, other catalytic particles, inorganic particles, and metal particles may be contained.

Porosity of the porous layer is preferably 40% to 90%, and more preferably 50% to 80%. When the porosity is less than 40%, there is a concern that sufficient gas diffusion does not occur in the porous substance, and thus the catalyst may not operate effectively. In addition, when the porosity exceeds 90%, the mechanical strength of the porous layer decrease, and thus there is a concern that deformation of the porous layer itself or peeling-off from the base material occurs, and thus the catalytic operation may decrease.

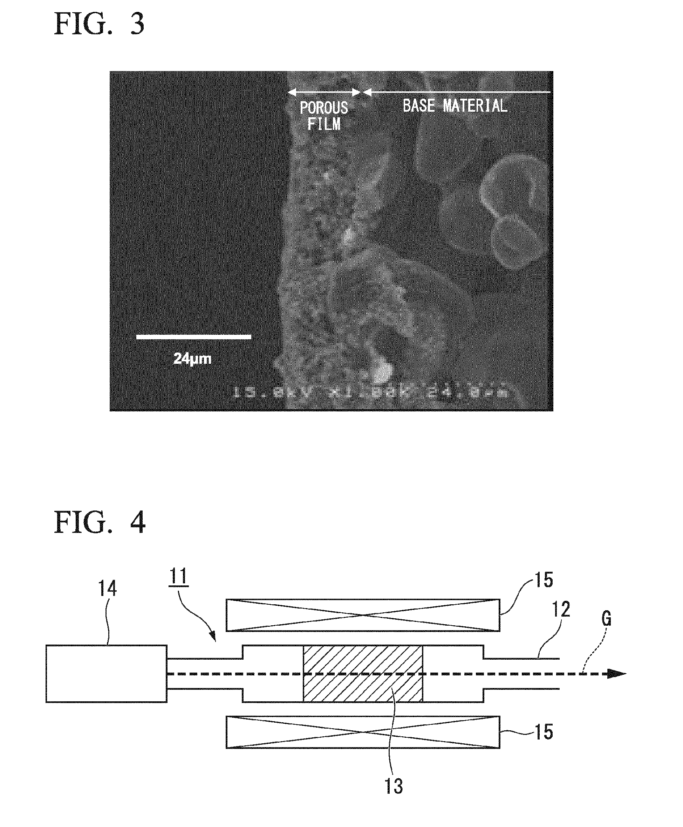

FIG. 2 is a schematic view illustrating a porous film 20 of this embodiment. FIG. 3 is a scanning electron microscope (SEM) image illustrating an example of the porous film of this embodiment. With regard to the porous film 20, a plurality of kinds of noble-metal-carrying silicon carbide particles 21a and 21b and surface-coated silicon carbide particles 25 agglomerate and the entirety of these particles form a porous film shape.

Here, in the noble-metal-carrying silicon carbide particle 21a, a noble metal particle 23 is carried on a surface of a silicon carbide particle 22, and the noble metal particle 23 is carried on the surface of the silicon carbide particle 22 in a state of being coated with an oxide layer 24.

In addition, in the noble-metal-carrying silicon carbide particle 21b, two noble metal particles 23 are carried on the surface of the silicon carbide particle 22, and the noble metal particles 23 are carried on the surface of the silicon carbide particle 22 in a state of being coated with the oxide layer 24.

The number of the noble metal particles 23, which are carried by the noble-metal-carrying silicon carbide particle may be 3 or more than 1 or 2.

On the other hand, in each of the surface-coated silicon carbide particles 25, the surface of the silicon carbide particle 22 is coated with the oxide layer 24, and the noble metal particle 23 is not carried on the surface of the silicon carbide particle 22.

As described above, the porous film 20 may be constituted by a mixture of the noble-metal-carrying silicon carbide particles 21a and 21b, and the surface-coated silicon carbide particle 25 on which the noble metal particle 23 is not carried. The porous film 20 may be constituted by only the noble-metal-carrying silicon carbide particles 21a and 21b, or may contain a noble-metal-carrying silicon carbide particle on which three or more noble metal particles 23 are carried.

Further, the noble-metal-carrying silicon carbide particle or the surface-coated silicon carbide particle may contain at least one kind of element selected from group 3 elements to group 14 elements such as silicon (Si), aluminum (Al), boron (B), zirconium (Zr), and titanium (Ti), or oxides thereof, carbides thereof, and nitride thereof as necessary. These may be contained alone or in combinations thereof. In addition, if other components are contained, the percentage of silicon carbide is preferably 80% by volume or more, and more preferably 90% by volume or more.

When an exhaust gas discharged from an internal combustion engine flows into the porous layer 20 that contains the noble-metal-carrying silicon carbide particle 1, the exhaust gas comes into contact with the noble-metal-carrying silicon carbide particle 1, which constitutes the catalyst, during flow, and thus carbon monoxide (CO), hydrocarbon (HC), nitrogen oxide (NOₓ), particulate matter (PM), and the like which are contained in the exhaust gas are oxidized and decomposed by the noble-metal-carrying silicon carbide particles 21a and 21b. Specifically, CO is oxidized and decomposed into CO₂, HC is oxidized and decomposed into H₂O and CO₂, NOₓ is oxidized and decomposed into NO₂, and carbon that constitutes the PM is oxidized and decomposed to CO₂. In addition, the surface-coated silicon carbide particle 25 also has an oxidizing and decomposing ability due to the oxygen release ability provided to the oxide layer 24 on the surface, and thus the oxidization and decomposition of CO, HC, NOₓ, and PM by the particle itself, or an auxiliary operation for the oxidizing and decomposing operation provided to the noble-metal-carrying silicon carbide particles 21a and 21b occurs.

Then, NO₂ is reduced to N₂, and then a purified gas, from which harmful components or the particulate matter is removed after decomposition, is discharged to the air.

### [Method of Manufacturing Exhaust Purification Catalyst and Exhaust Emission Control Device for Internal Combustion Engine]

The method of manufacturing the exhaust purification catalyst and the exhaust emission control device for an internal combustion engine according to this embodiment will be described.

In this embodiment, a method in which, first, the exhaust purification catalyst is manufactured and the exhaust emission control device is manufactured using the exhaust purification catalyst that is obtained may be employed. On the other hand, a method in which the exhaust purification catalyst is simultaneously prepared during manufacturing of the exhaust emission control device is also possible. Therefore, in the following description, the manufacturing method is divided into respective processes, and a possible process sequence is illustrated first, and then the details of the respective processes are described.

The method of manufacturing the exhaust purification catalyst and the exhaust emission control device for an internal combustion engine of this embodiment includes a mother material preparing process of preparing silicon carbide particles as a mother material ([A] process), a noble metal particle carrying process of carrying the noble metal particle on the silicon carbide particle ([B] process), and an oxide layer forming process of forming the oxide layer on the surface of the silicon carbide particle ([C] process). In addition, in the method of manufacturing the exhaust emission control device for an internal combustion engine, a process of carrying the silicon carbide particle on a base material that constitutes the exhaust emission control device ([D] process) is also included.

A sequence of these four processes of [A] to [D] has the following restriction. First, it is necessary for the mother material preparing process [A] to be performed first. Next, it is necessary for the oxide layer forming process [C] to be performed with respect to the silicon carbide particle on which the noble metal particle is carried (not performed with respect to a silicon carbide particle alone). The reason for the restriction is as follows. Even when the noble metal particle is carried after forming the oxide layer in the silicon carbide particle, sufficient oxidizing catalytic characteristics cannot be obtained. Next, the carrying process [D] on the base material is not necessary in the process of manufacturing the exhaust purification catalyst. There are three restrictions, and thus a sequence may be arbitrarily selected as long as these restrictions are satisfied.

In addition, the noble metal particle carrying process [B] and the carrying process [D] on the base material have similar processes such as dissolution or dispersion in a solvent (dispersion medium), drying and removal of the solvent (dispersion medium), and a heat treatment.

Accordingly, when manufacturing the exhaust emission control device, the noble metal particle carrying process [B] and the carrying process [D] on the base material may be simultaneously performed.

As described above, in the method of manufacturing the exhaust purification catalyst and the exhaust emission control device for an internal combustion engine of this embodiment, the following process sequence may be selected. In addition, it is assumed that a case of performing a subsequent process after an arbitrary process is indicated by "→ (right arrow)", and a case of simultaneously performing two processes is indicated by "=".

First, the method of manufacturing the exhaust purification catalyst is performed in the following process sequence.

### (1-1) : [A]→[B]→[C]

In this method, the surface oxide layer is formed on the silicon carbide particle after carrying the noble metal particle on the silicon carbide particle. This one kind of process sequence only satisfies the above-described restrictions.

Next, the method of manufacturing the exhaust emission control device is performed by the following four kinds of process sequences.

### (2-1) : [A]→[B]→[C]→[D]

In this method, after manufacturing the exhaust purification catalyst (the silicon carbide particle on which the noble metal particle is carried and the surface oxide layer is formed), the exhaust purification catalyst is carried on the base material.

### (2-2): [A]→[B]→[D]→[C]

In this method, after forming the silicon carbide particle on which the noble metal particle is carried, and carrying this silicon carbide particle on the base material, the surface oxide layer is formed.

### (2-3) : [A]→[D]→[B]→[C]

In this method, after carrying the silicon carbide particle, which is the mother material, on the base material, the noble metal particle is carried on the silicon carbide particle that is carried, and then the surface oxide layer is formed.

### (2-4): [A]→[B]= [D]→[C]

In this method, after simultaneously performing the carrying of the noble metal particle on the silicon carbide particle that becomes the mother material, and the carrying of the silicon carbide particle that becomes the mother material on the base material, the surface oxide layer is formed on the noble-metal-particle-carrying porous silicon carbide layer that is obtained.

Next, the respective processes will be described in detail.

### "Mother Material Preparing Process"

In this process, the silicon carbide particle that becomes the mother material is prepared.

An average primary particle size of the silicon carbide particle may be selected depending on characteristics of the exhaust purification catalyst and the exhaust emission control device, which are required, but a range of 0.01 µm to 5 µm is preferable. When the silicon carbide particle is a nanometer-sized particle, the silicon carbide particle may be obtained using the above-described methods, that is, the thermal plasma method, the silica precursor baking method, and the like. When the silicon carbide particle is a particle having a size distribution from submicron to micron (micrometer), the silicon carbide particle may be obtained using the Acheson process, the silica reduction method, the silicon carbonization method, and the like.

### "Noble Metal Particle Carrying Process"

In this process, the noble metal particle is carried on the surface of the silicon carbide particle that becomes the mother material, or on the surface of silicon carbide particle which is carried on the base material that constitutes the exhaust emission control device and in which the porous silicon carbide particle layer is formed, thereby forming noble-metal-carrying silicon carbide particles or a porous layer formed from the noble-metal-carrying silicon carbide particles.

First, a solution in which noble metal salts as sources of the noble metal are dissolved, or a dispersion liquid in which noble metal compound fine particles are dispersed is prepared. As a solvent or dispersion medium, water is preferable. However, in a case where the noble metal sources are decomposed in water and precipitate, an organic solvent may be used. As the organic solvent, a polar solvent is preferable, and alcohols, ketones, and the like are appropriately used.

Next, the silicon carbide particles are immersed and dispersed in the solution or the dispersion liquid, or the porous silicon carbide particle layer (the base material on which the silicon carbide particle is carried) is immersed in the solution or the dispersion liquid and is dried at a temperature of approximately 60°C to 250°C to remove the water or the dispersion medium. According to this, the noble metal salts or the noble metal compound fine particles may be attached to the surface of the silicon carbide particles (including particles forming the porous layer).

Next, the porous layer or the silicon carbide particles to which the noble metal salts or the noble metal compound fine particles are attached is subjected to a heat treatment in a reducing atmosphere including hydrogen, carbon monoxide, and the like, or in an inert atmosphere such as nitrogen, argon, neon, xenon, and the like, thereby reducing and decomposing the noble metal salts or the noble metal compound to form the noble metal fine particle. A heat treatment temperature or a heat treatment time may be appropriately selected depending on the kinds of the noble metal sources, atmospheric conditions, and the like. However, typically, the heat temperature is set to be in a range of 500°C to 1500°C, and the heat treatment time is set to be in a range of 10 minutes to 24 hours. In addition, a temperature higher than necessary and time longer than necessary may cause sintering of the silicon carbide particles or sintering of the noble metal particles that are generated, and thus are not preferable. According to the above-described processes, it is possible to obtain the silicon carbide particles in which the noble metal fine particles are carried on the surface, or the porous layer formed from the silicon carbide particles which are carried on the base material and in which the noble metal fine particles are carried on a surface.

Examples of the noble metal sources, which are used in the processes, include salts or compounds which contain one or two or more kinds of noble metal elements selected from a group consisting of platinum (Pt), gold (Au), silver (Ag), ruthenium (Ru), rhodium (Rh), palladium (Pd), osmium (Os), and iridium (Ir) which are noble metal particles, for example, chlorides, sulfates, nitrates, organic acid salts, complex (complex salts), hydroxides, and the like.

### "Oxide Layer Forming Process"

In this process, the silicon carbide particle on which the noble metal particle is carried, or the porous silicon carbide particle layer which is carried on the base material and on which the noble metal particle is carried is subjected to an oxidizing treatment to form the oxide layer on the surface of the noble-metal-particle-carrying silicon carbide particle, whereby the exhaust purification catalyst (silicon carbide particle which carries the noble metal particle and on which the surface oxide layer is formed), or the porous layer formed from the exhaust purification catalyst is formed.

With regard to the oxidizing treatment, the noble-metal-carrying silicon carbide particle itself, or the porous silicon carbide particle layer which is carried on the base material and on which the noble metal particle is carried, that is, the base material including a layer in which noble-metal-carrying silicon carbide particles are partially sintered is subjected to the oxidizing treatment in an oxidizing atmosphere such as air and oxygen at a temperature of 600°C to 1000°C and preferably 650°C to 900°C for 0.5 hours to 36 hours and preferably 4 hours to 12 hours, thereby forming an oxide layer on the surface of the silicon carbide particle.

According to the present embodiment, it is possible to form the silicon carbide particle, that is, the exhaust purification catalyst, in which the noble metal particle is carried on a surface and the noble particle particle is coated with the oxide layer, or the porous layer, that is, the exhaust emission control device in which the silicon carbide particle is carried on the base material in a state in which the noble metal particle is carried on the surface of the silicon carbide particle and the noble metal particles are coated with the oxide layer. As described above, when the oxide layer is formed under the above-described conditions, and the average primary particle size of the noble metal particle is 50 nm or less, it is possible to form a catalyst particle having high catalytic activity in which the noble metal particle is completely coated with the oxide layer without being protruded from the oxide layer.

### "Carrying Process on Base Material"

This carrying process on the base material includes a process of dispersing any one of the silicon carbide particles as the mother material, the noble-metal-particle-carrying silicon carbide particles, and the silicon carbide particles on which the noble metal particle is carried and in which the surface oxide layer is formed in the dispersion medium to prepare a silicon carbide particle dispersion liquid, and a process of applying (coating) the silicon carbide particle dispersion liquid on the base material that constitutes the exhaust emission control device, performing drying, and partially sintering the silicon carbide particles to form a porous layer.

First, any one of the silicon carbide particles, the noble-metal-particle-carrying silicon carbide particles, and the silicon carbide particles, on which the noble metal particle is carried and in which the surface oxide layer is formed, is dispersed in the dispersion medium to prepare a silicon carbide particle dispersion liquid.

As the dispersion medium, any dispersion medium may be used as long as this dispersion medium can uniformly disperse silicon carbide particles, and water or an organic solvent is appropriately used. In addition, an elementary substance of a polymeric monomer or an oligomer or a mixture of these may be used as necessary.

Examples of the organic solvent that is appropriately used include alcohols such as methanol, ethanol, 1-propanol, 2-propanol, diacetone alcohol, furfuryl alcohol, ethylene glycol, and hexylene glycol; esters such as acetic acid methyl ester and acetic acid ethyl ester; ethers such as diethyl ether, ethylene glycol monomethyl ether (methyl cellosolve), ethylene glycol monoethyl ether (ethyl cellosolve), ethylene glycol monobutyl ether (butyl cellosolve), diethylene glycol monomethyl ether, diethylene glycol monoethyl ether, dioxane, and tetrahydrofuran; ketones such as acetone, methyl ethyl ketone, acetylacetone, and acetoacetic ester; acid amides such as N,N-dimethylformamide; aromatic hydrocarbon such as toluene and xylene; and the like. These solvents may be used alone or two or more kinds thereof may be mixed and used.

As the polymeric monomer, an acryl-based monomer or methacryl-based monomer such as methyl acrylate and methyl methacrylate, an epoxy-based monomer, and the like may be used. In addition, as the oligomer, urethane acrylate-based oligomer, epoxy acrylate-based oligomer, acrylate-based oligomer, and the like may be used.

A dispersing agent (surface treatment agent), asurfactant, a preservative, a stabilizing agent, a defoaming agent, a leveling agent, and the like may be appropriately added to the dispersion liquid to secure dispersion stability or to improve application property. An added amount of the dispersing agent, the surfactant, the preservative, the stabilizing agent, the defoaming agent, and the leveling agent is not particularly limited, and the addition may be performed depending on an addition purpose.

As a device that is applicable to a carrier preparing process, for example, a kneader, a roll mill, a pin mill, a sand mill, a ball mill, a planetary ball mill, and the like may be exemplified as a device capable of dispersing the silicon carbide particle in the dispersion medium, but the sand mill, the ball mill, and the planetary ball mill, and the like are preferable to disperse the silicon carbide particle in the dispersion medium using a dispersive medium.

In addition, examples of the dispersive medium such as a ball include a resin-covered body including a metal core formed from steel, lead, and the like is formed, a sintered body of an inorganic oxide such as alumina, zirconia, silica, and titania, a sintered body of a nitride such as silicon nitride, a sintered body of a silicide such as silicon carbide, glass such as soda glass, lead glass, and high specific gravity glass, but as the dispersive medium that is used in this embodiment, from the viewpoints of mixing and dispersing efficiency, zirconia having specific gravity 6 or more, the resin-covered body including the core formed from steel, and the like are preferable.

Next, the silicon carbide particle dispersion liquid is applied to the base material that constitutes the exhaust emission control device, for example, a base material having a honeycomb structure (hereinafter, also referred to as a "honeycomb base material"), and is dried to form a coated film (applied and dried layer) on the base material.

Here, the "honeycomb structure" in this embodiment represents a structure in which a plurality of gas flow passages which are divided by a partition wall and are disposed in parallel with each other, and of which both ends have opening are formed in the base material. An exhaust gas discharged from an internal combustion engine flows into from one end side, the exhaust gas comes into contact with the catalyst disposed on the partition wall during passing through the gas flow passage and is purified, and the purified exhaust gas is discharged from the other end side.

Here, the silicon carbide particle dispersion liquid is applied on the base material such as the honeycomb base material by a bar coat method, a slip cast method, a wash coat method, and the like, and is dried to form a coated film on the base material. In addition, the coated film may be formed on the base material by immersing the base material such as the honeycomb base material in the silicon carbide particle dispersion liquid, and by pulling up and drying the base material.

In addition, the drying, that is, the removal of the water or organic solvent may be performed in the atmospheric atmosphere at a temperature of approximately 100°C to 250°C.

Next, the base material such as the honeycomb base material on which the coated film containing the silicon carbide particle is formed is subjected to a heat treatment under an inert atmosphere such as nitrogen, argon, neon, and xenon, or in a reducing atmosphere such as hydrogen and carbon monoxide at a temperature of 500°C to 1500°C, and preferably a temperature of 600°C to 1100°C.

According to this heat treatment, the dispersion medium in the coated film, that is, the water or the organic solvent that remains, or the polymeric monomer or the oligomer, or an additive such as the dispersing agent, the surfactant, the preservative, the stabilizing agent, the defoaming agent, and the leveling agent in the coated film is scattered, and the silicon carbide particles are partially sintered to form a neck portion in which the particles are bonded to each other, whereby a porous film bonded in a porous substance shape is formed.

In addition, the drying of the dispersion liquid may be integrated with a heat treatment process as a previous stage of the heat treatment process.

In addition, said heat treatment process may be omitted as long as the oxide layer may be formed on the surface of the silicon carbide particle and silicon carbide particles may be partially sintered by adjusting heat treatment conditions in the oxide layer forming process.

### (Case of Simultaneously Performing Noble Metal Particle Carrying Process and Porous Film Forming Process)

The noble metal particle carrying process and the porous film forming process are similar processes. Accordingly, both of the processes may be simultaneously performed in parallel with each other in the method of manufacturing the exhaust emission control device used in an internal combustion engine.

First, the process of preparing the solution in which the noble metal salts as the source of the noble metal are dissolved, or the dispersion liquid in which the noble metal compound fine particles are dispersed in the noble metal particle carrying process, and the process of preparing the dispersion medium in the porous film forming process are similar to each other. In addition, the process of immersing and dispersing the silicon carbide particle in the solution or the dispersion liquid in the noble metal particle carrying process and the process of preparing the silicon carbide particle dispersion liquid in the porous film forming process are similar to each other.

Accordingly, these processes may be collectively performed in a single process by dissolving or dispersing the noble metal sources in the silicon carbide particle dispersion medium in the porous film forming process. In addition, as the dispersion medium, it is necessary to select a substance in which the noble metal sources can be easily dissolved or dispersed, and particularly, water may be used when appropriate. On the other hand, in a case of using the organic solvent and the like, the noble metal sources that are easily dispersed in the organic solvent may be selected.

Next, the porous film forming process includes a process of applying (coating) the silicon carbide particle dispersion liquid on the partition wall which constitutes the filter base body and is formed from the porous substance, but the noble metal particle carrying process does not include a corresponding process.

Next, the process of removing the water or the dispersion medium, which is a solvent, for drying in the noble metal particle carrying process, and the process of drying the partition wall which is formed from the porous substance and to which the silicon carbide particle dispersion liquid is applied in the porous film forming process are similar to each other.

These both processes are drying processes and are substantially the same processes, and thus these processes may be performed in a single process. A drying temperature may be set to be in a range that is common to both processes, that is, a temperature of approximately 100°C to 250°C.

Next, the process of forming the noble metal fine particle by performing the heat treatment in the reducing atmosphere or the inert atmosphere in the noble metal particle carrying process, and the process of forming the porous film by subjecting the partition wall in which the applied and dried film is formed and which is formed form the porous substance to the heat treatment in the reducing atmosphere or the inert atmosphere to allow the partition wall to be partially sintered in the porous film forming process are similarly to each other.

Since the both processes are substantially the same processes from the viewpoint of performing the heat treatment in the reducing atmosphere or the inert atmosphere, these processes may be performed in a single process.

A heat treatment temperature or a heat treatment time may be selected in a range common to both processes in consideration of noble metal particle generation conditions or porous film forming conditions.

When performing the above-described processes, that is, the process of dissolving or dispersing the noble metal sources in the dispersion medium, the process of dispersing the silicon carbide particle in the dispersion medium, the process of applying the silicon carbide particle dispersion liquid that is obtained to the partition wall which constitutes the filter base body and is formed from the porous substance, the process of drying the coated film that is obtained, and the process of subjecting the coated film that is obtained to the heat treatment, the noble metal particle carrying process is integrated in the porous film forming process. Accordingly, it is possible to simultaneously perform the noble metal particle carrying process and the porous film forming process in parallel with each other as an integrated process.

According to the above-described configuration, it is possible to prepare the exhaust emission control device for an internal combustion engine of this embodiment.

As described above, according to the exhaust purification catalyst of this embodiment, the noble metal particle is carried on the surface of the silicon carbide particle, and the noble metal particles are carried in a state of being coated with the oxide layer, and thus the noble metal fine particles are uniformly carried on the surface of the silicon carbide particle. In addition, the noble metal particles are carried in a state of being coated with the oxide layer. Accordingly, it is possible to secure an effective catalytic active site. In addition, the noble metal particle is present as a fine particle which is highly dispersed (has large specific surface area), and thus it is possible to exhibit and maintain high catalytic activity at a low temperature, for example, 200°C or lower without increasing the amount of noble metal particles.

In addition, the fine silicon carbide particle itself has durability at a high temperature, and the noble metal particle is carried in a state of being coated with the oxide layer, and thus even in a high-temperature environment, it is possible to maintain the same high catalytic activity as that at the low temperature.

According to the above-described configuration, the high catalytic activity at a low temperature and the high durability at a high temperature are compatible with each other. As a result, it is possible to maintain high durability while maintaining high catalytic activity over a low-temperature region to a high-temperature region.

In addition, typically, grain growth of the fine noble metal particle progresses at a relatively low temperature. However, since the noble metal particles of this embodiment are coated with the oxide layer on the surface of the silicon carbide particle, the oxide layer and the noble metal particle can bond together, and thus even at a high temperature, migration of the noble metal particles on the carrier can be suppressed, and thus sintering (grain growth) of the noble metal particles can be prevented.

Particularly, since "silicon carboxide" which tends to form a bonding with the noble metal particles is contained, the effect of preventing sintering of the noble metal particles further increases.

In addition, it is known that the melting point of a fine noble metal particles is lowered. However, melting of the noble metal particles can be suppressed due to a chemical bond with the oxide layer, particularly, the silicon carboxide.

In addition, the silicon carbide is stable even at high temperatures, and thus grain growth is less likely to occur in comparison to ceramics formed from a metal oxide such as alumina, ceria, and zirconia, or a metal composite oxide having a perovskite structure expressed by General Formula ABO₃ (provided that, A and B represent metal elements) which has been used in the related art. According to this, even after being exposed to a high temperature in a manufacturing process or in use, it is possible to maintain a distance between noble metal particles, and as a result, it is possible to prevent contact between the noble metal particles. Accordingly, sintering (grain growth) is less likely to occur.

According to the exhaust emission control device for an internal combustion engine of this embodiment, the exhaust purification catalyst of this embodiment is at least one catalyst that is disposed in the exhaust passage of the internal combustion engine. Accordingly, the catalytic activity at a low temperature is high, and even when being exposed to a high temperature, the catalytic activity does not decrease, and thus high durability can be maintained. Accordingly, it is possible to effectively oxidize, decompose, and remove carbon monoxide (CO), hydrocarbon (HC), nitrogen oxide (NOₓ), particulate matter (PM), and the like which are contained in an exhaust gas discharged from an internal combustion engine, and thus it is possible to obtain an exhaust emission control device for an internal combustion engine, which has further higher reliability.

### Examples

Hereinafter, the invention will be described in detail with reference to Examples and Comparative Examples, but the invention is not limited by Examples.

### [Each Measurement and Evaluation Method]

First, a description will be made with respect to an evaluation method in the exhaust purification catalysts and exhaust emission control devices for an internal combustion engine of Examples and Comparative Examples.

### (1) Composition of Oxide Layer

The porous layer containing the catalyst was cut for each honeycomb base material and was measured by using an X-ray photoelectric analyzer (XPS/ESCA) (Sigma Probe, manufactured by VG-Scientific Co.) to perform surface composition analysis with respect to a surface of a SiC particle that forms the porous layer.

### (2) Carried State of Noble Metal Particle and Average Primary Particle Size

The porous layer containing the catalyst was cut for each honeycomb base material, and was observed by using a field emission transmission electron microscope (FE-TEM) (JEM-2100F, manufactured by Japan Electronic Co. , Ltd) to evaluate a carried state of the noble metal particles.

In addition, with regard to the average primary particle size of the noble metal particles, the primary particle sizes of 500 noble metal particles, which were randomly selected from an observed image obtained in the same manner, were measured, and the average value thereof was set to the average primary particle size of the noble metal particles.

### (3) Specific Surface Area

The porous layer containing the catalyst was cut for each honeycomb base material, and a specific surface area was measured by using a BET specific surface area measurement device (BELSORP-mini, manufactured by Japan BEL Co., Ltd.), and a value, which was obtained by subtracting a specific surface area corresponding to the substrate weight that was measured separately from the measured specific surface area, was the specific surface area of the catalytic layer.

### (4) Average Porosity of Porous Film

The porous layer containing the catalyst was cut for each honeycomb base material, and average porosity of a porous layer portion containing the catalyst was measured by using a mercury porosimeter (Pore Master 60GT, manufactured by Quantachrome Co., Ltd.).

### (5) CO Purification Temperature and HC Purification Temperature

The honeycomb base material (hereinafter, also referred to as "porous-layer-formed honeycomb base material"), in which the porous layer containing the catalyst was formed, was mounted in the exhaust emission control device (exhaust purification catalyst evaluation device), and the temperature of the porous-layer-formed honeycomb base material was increased while a simulated exhaust gas was introduced to flow through the exhaust emission control device. Then, the components of the simulated exhaust gas after flowing through the exhaust emission control device were measured to measure a purification rate of carbon monoxide (CO) and hydrocarbon (HC). Here, a temperature (T50) of a filter base body when 50% of CO or HC was purified, that is, a temperature when an amount of CO or HC in the simulated exhaust gas after passing through the exhaust emission control device became a half of an amount CO or HC in the simulated exhaust gas that was introduced was an index.

FIG. 4 is a schematic view of the exhaust emission control device that was used in this test. In the exhaust emission control device 11, a porous-layer-formed honeycomb base material 13 as a test specimen was disposed inside of a tubular exhaust passage 12, a bottle 14, which stores the simulated exhaust gas G shown in Table 1, was disposed on an upstream side of the exhaust passage 12, and a cylindrical heating furnace 15 was provided to surround the exhaust passage 12. The heating furnace 15 was configured to control the inside of the exhaust passage 12 using a control device (not shown) at a desired temperature. Here, as the porous-layer-formed honeycomb base material 13, a honeycomb base material, which had a volume of 29 cm³ and in which SV was 28000/mesh, was used.

Table 1 shows the components of the simulated exhaust gas that was used in this measurement.

A temperature condition during measurement was set to be in a temperature-lowering condition from 500°C by 17°C/minute, and a flow rate (special speed) of the simulated exhaust gas G was set to 13.5 L/minute.

In addition, a temperature inside the furnace was measured at a position on a downstream side of the porous-layer-formed honeycomb base material 13 by 10 mm, and this temperature was used as the temperature of the porous-layer-formed honeycomb base material.

**[Table 1]**

| Kinds of gas | Content ratio |
|---|---|
| O₂ | 6% by volume |
| CO₂ | 10% by volume |
| HC(C₃H₆) | 500 ppm (167 ppm) |
| CO | 1000 ppm |
| NO | 200 ppm |
| H₂O | 7% by volume |
| N₂ | Remainder |

### (6) Evaluation of Heat Resistance

The honeycomb base material in which the catalyst-containing porous layer was formed was subjected to a heat treatment in the air at 700°C for 30 hours.

With respect to the porous-layer-formed honeycomb base material after the heat treatment, a specific surface area, a CO purification temperature and a HC purification temperature were measured by the above-described method, and the comparison with results before the heat treatment was made to evaluate the heat resistance.

### [Example 1]

15 g of silicon carbide particles having an average primary particle size of 0.035 µm was added to a dispersion medium in which ammonium polycarboxylate as a surfactant and a deforming agent were dissolved in 80 g of pure water, and in this state, a dispersion treatment using zirconia beads as a dispersive medium was performed for 180 minutes.

An aqueous solution of dinitro-platinate was added to the resultant slurry, which was obtained, in such a manner that platinum became 0.01 g on the basis of 1 g of silicon carbide particles, and a dispersion treatment using zirconia beads as the dispersive medium was performed again for 30 minutes. Then, evaporation and drying were performed to prepare platinum-salt-carrying silicon carbide particles.

Next, the platinum-salt-carrying silicon carbide particles, water, and gelatin used as a gelating agent were weighed in content ratios of 10.0% by volume, 87.5% by volume, and 2.5% by volume. Next, the platinum-salt-carrying silicon carbide particles and water were mixed with a ball mill using a resin ball including an iron core at a rotation speed of 220 rpm for 12 hours to obtain a dispersion liquid. Then, the gelatin was added to the dispersion liquid that was obtained and mixing was performed for 20 minutes to obtain a silicon carbide particle dispersion liquid (application liquid) of Example 1.

Next, a honeycomb-structured base material formed from cordierite was immersed in the silicon carbide particle dispersion liquid. Then, the base material was pulled up, and was dried at 100°C for 12 hours, thereby forming an applied and dried layer formed from the platinum-salt-carrying silicon carbide particles on the base material.

Next, the base material on which the applied and dried layer was formed was subjected to a heat treatment under the following conditions.

First step: temperature = 980°C, retention time = 80 minutes, and atmosphere = argon

Second step: temperature = 730°C, retention time = 360 minutes, and atmosphere = air

Through this heat treatment, formation of a porous layer by partial sintering of the silicon carbide particles, formation of platinum (noble metal) fine particles by reduction and decomposition of dinitro-platinate carried on the surface of the silicon carbide particles, and formation of a surface oxide layer of the silicon carbide particles were performed, thereby preparing a honeycomb base material in which a porous layer containing the catalyst of Example 1 was formed.

In the exhaust purification catalyst that was obtained, a platinum fine particle having an average primary particle size of 3 nm was carried on the surface of the silicon carbide particles. In addition, an oxide layer, which was formed from an amorphous compound (SiOₓ, provided that, 0<x≤3) containing silicon and oxygen in combination and an amorphous compound (SiO_{y}C_{z}, provided that, 0<y≤3 and 0<z≤3) containing silicon, oxygen, and carbon in combination, was formed on the surface of the silicon carbide particles, and the platinum fine particle was coated with the oxide layer. In addition, in a field-emission transmission electron microscope image (FE-TEM image) of the exhaust purification catalyst that was obtained, a crystal lattice image was not recognized in the oxide layer. From this observation, it was discovered that the oxide layer was an amorphous substance.

The specific surface area and the average porosity of the porous layer containing the catalyst were 39 m²/g and 75%, respectively.

In addition, the CO purification temperature and the HC purification temperature, which were measured using the exhaust emission control device, were 173°C and 186°C, respectively.

Further, the specific surface area, the CO purification temperature, and the HC purification temperature after the heat treatment at 700°C were 36 m²/g, 183°C, and 199°C, respectively.

These results are collectively shown in Table 2.

### [Example 2]

15 g of silicon carbide particles having an average primary particle size of 0.015 µm was added to a dispersion medium in which ammonium polycarboxylate as a surfactant and a deforming agent were dissolved in 80 g of pure water, and in this state, a dispersion treatment using zirconia beads as a dispersive medium was performed for 180 minutes.

An aqueous solution of dinitro-platinate was added to the resultant slurry, which was obtained, in such a manner that platinum became 0.05 g on the basis of 1 g of silicon carbide particles, and a dispersion treatment using zirconia beads as the dispersive medium was performed again for 30 minutes. Then, evaporation and drying were performed to prepare platinum-salt-carrying silicon carbide particles.

Next, the platinum-salt-carrying silicon carbide particles were subjected to a heat treatment under the following conditions. In addition, a first step corresponds to a drying process.

First step: temperature = 120°C, retention time = 24 hours, and atmosphere = air

Second step: temperature = 600°C, retention time = 90 minutes, and atmosphere = argon

Third step: temperature = 700°C, retention time = 60 minutes, and atmosphere = air

Through this heat treatment, formation of platinum (noble metal) fine particles by reduction and decomposition of dinitro-platinate carried on the surface of the silicon carbide particles, and formation of a surface oxide layer of the silicon carbide particles were performed, thereby forming noble-metal-carrying silicon carbide particles in which the oxide layer was formed.

Next, the noble-metal-carrying silicon carbide particles in which the oxide layer was formed, water, and gelatin used as a gelating agent were weighed in content ratios of 6.0% by volume, 93.0% by volume, and 1.0% by volume. Next, the noble-metal-carrying silicon carbide particles in which the oxide layer was formed and water were mixed with a ball mill using a resin ball including an iron core at a rotation speed of 220 rpm for 48 hours to obtain a dispersion liquid. Then, the gelatin was added to the dispersion liquid that was obtained and mixing was performed for 20 minutes to obtain a silicon carbide particle dispersion liquid (application liquid) of Example 2.

Next, a honeycomb-structured base material formed from aluminum titanate was immersed in the silicon carbide particle dispersion liquid. Then, the base material was pulled up, and was dried at 100°C for 12 hours, thereby forming an applied and dried layer, which was formed from the noble-metal-carrying silicon carbide particles in which the oxide layer was formed, on the base material.

Next, the base material on which the applied and dried layer was formed was subjected to a heat treatment under the following conditions.

First step: temperature = 1000°C, retention time = 30 minutes, and atmosphere = argon

Second step: temperature = 700°C, retention time = 12 hours, and atmosphere = air

Through this heat treatment, formation of a porous layer by partial sintering of the silicon carbide particles, and formation of a surface oxide layer of the silicon carbide particles were performed, thereby preparing a porous layer that contains the catalyst of Example 2.

In the exhaust purification catalyst that was obtained, a platinum fine particle having an average primary particle size of 10 nm was carried on the surface of the silicon carbide particles. In addition, an oxide layer, which was formed from an amorphous compound (SiOₓ, provided that, 0<x≤3) containing silicon and oxygen in combination and an amorphous compound (SiO_{y}C_{z}, provided that, 0<y≤3 and 0<z≤3) containing silicon, oxygen, and carbon in combination, was formed on the surface of the silicon carbide particles, and the platinum fine particle was coated with the oxide layer. In addition, as is the case with Example 1, from the FE-TEM image, it was discovered that the oxide layer was an amorphous substance.

The specific surface area and the average porosity of the porous layer containing the catalyst were 85 m²/g and 89%, respectively.

In addition, the CO purification temperature and the HC purification temperature, which were measured using the exhaust emission control device, were 169°C and 179°C, respectively.

Further, the specific surface area, the CO purification temperature, and the HC purification temperature after the heat treatment at 700°C were 81 m²/g, 178°C, and 192°C, respectively.

These results are collectively shown in Table 2.

### [Example 3]

15 g of silicon carbide particles having an average primary particle size of 0.030 µm was added to a dispersion medium in which ammonium polycarboxylate as a surfactant and a deforming agent were dissolved in 80 g of pure water, and in this state, a dispersion treatment using zirconia beads as a dispersive medium was performed for 180 minutes.

An aqueous solution of dinitro-platinate was added to the resultant slurry, which was obtained, in such a manner that platinum became 0.1 g on the basis of 1 g of silicon carbide particles, and a dispersion treatment using zirconia beads as the dispersive medium was performed again for 30 minutes, thereby obtaining slurry.

Silicon carbide particles having an average primary particle size of 0.8 µm were added to the slurry that was obtained, thereby preparing a mixed liquid in which an amount of platinum was adjusted to be 0.01 g on the basis of 1 g of the silicon carbide particles in the slurry.

Water and gelatin were added to the mixed liquid in such a manner that the content ratio of the silicon carbide particles became 25.5% by volume, the content ratio of water became 72.0% by volume, and the content ratio of gelatin used as a gelating agent became 2.5% by volume, thereby adjusting a silicon carbide particle dispersion liquid of Example 3. First, ammonium polycarboxylate as a surfactant was added to the mixed liquid, water in an amount needed to realize the above-described ratio was added to the mixed liquid, and then the resultant mixture was mixed with a ball mill using a resin ball including an iron core at a rotation speed of 220 rpm for 48 hours to obtain a dispersion liquid. Next, gelatin was added to the dispersion liquid in an amount needed to realize the above-described ratio, and then mixing was performed for 20 minutes, thereby obtaining a silicon carbide particle dispersion liquid (application liquid) of Example 3.

Next, a honeycomb-structured base material formed from cordierite was immersed in the silicon carbide particle dispersion liquid. Then, the base material was pulled up, and was dried at 100°C for 12 hours, thereby forming an applied and dried layer formed from the platinum-salt-carrying silicon carbide particles on the base material.

Next, the base material on which the applied and dried layer was formed was subjected to a heat treatment under the following conditions.

First step: temperature = 900°C, retention time = 120 minutes, and atmosphere = argon

Second step: temperature = 600°C, retention time = 480 minutes, and atmosphere = air

Through this heat treatment, formation of a porous layer by partial sintering of the silicon carbide particles, formation of platinum (noble metal) fine particles by reduction and decomposition of dinitro-platinate carried on the surface of the silicon carbide particles, and formation of a surface oxide layer of the silicon carbide particles were performed, thereby preparing a porous layer that contained the catalyst of Example 3.

In the exhaust purification catalyst that was obtained, a platinum fine particle having an average primary particle size of 10 nm was carried on the surface of the silicon carbide particles. In addition, an oxide layer, which was formed from an amorphous compound (SiOₓ, provided that, 0<x≤3) containing silicon and oxygen in combination and an amorphous compound (SiO_{y}C_{z}, provided that, 0<y≤3 and 0<z≤3) containing silicon, oxygen, and carbon in combination, was formed on the surface of the silicon carbide particles, and the platinum fine particles were coated with the oxide layer.

The specific surface area and the average porosity of the porous layer containing the catalyst were 13 m²/g and 68%, respectively.

In addition, the CO purification temperature and the HC purification temperature, which were measured using the exhaust emission control device, were 179°C and 183°C, respectively.

Further, the specific surface area, the CO purification temperature, and the HC purification temperature after the heat treatment at 700°C were 11 m²/g, 188°C, and 201°C, respectively.

These results are collectively shown in Table 2.

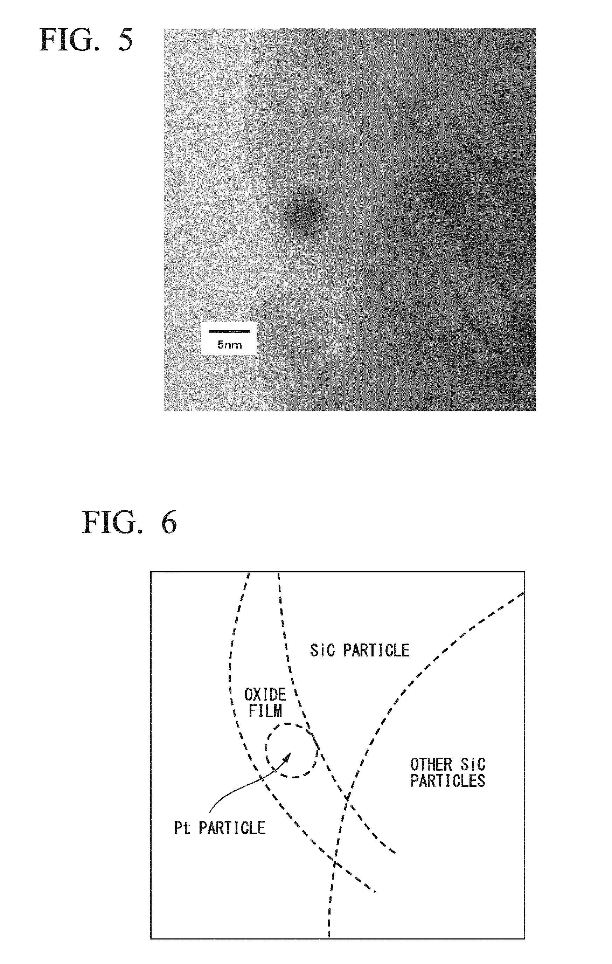

FIG. 5 is a field-emission transmission electron microscope image (FE-TEM image) of an exhaust purification catalyst of Example 3, and FIG. 6 is an explanatory view illustrating a structure of the exhaust purification catalyst shown in FIG. 5.

In these drawings, the silicon carbide particles, the oxide film (oxide layer) that is formed on the surface of the silicon carbide particles, and the platinum fine particle (noble metal fine particle) coated with the oxide film (oxide layer) are shown.

In the FE-TEM image, a crystal lattice image was not recognized in the oxide layer. From this observation, it is discovered that the oxide layer was an amorphous substance.

### [Example 4]

15 g of silicon carbide particles having an average primary particle size of 0.06 µm was added to a dispersion medium in which ammonium polycarboxylate as a surfactant and a deforming agent were dissolved in 80 g of pure water, and in this state, a dispersion treatment using zirconia beads as a dispersive medium was performed for 180 minutes.

An aqueous solution of palladium nitrate was added to the resultant slurry, which was obtained, in such a manner that platinum became 0.1 g on the basis of 1 g of silicon carbide particles, and a dispersion treatment using zirconia beads as the dispersive medium was performed again for 30 minutes, thereby obtaining a slurry.

Silicon carbide particles having an average primary particle size of 5.0 µm were added to the slurry that was obtained, thereby preparing a mixed liquid in which an amount of palladium was adjusted to be 0.01 g on the basis of 1 g of the silicon carbide particles in the slurry.

Water and gelatin were added to the mixed liquid in such a manner that the content ratio of the silicon carbide particles became 35.0% by volume, the content ratio of water became 63.5% by volume, and the content ratio of gelatin used as a gelating agent became 1.5% by volume, thereby adjusting a silicon carbide particle dispersion liquid of Example 4. First, ammonium polycarboxylate as a surfactant was added to the mixed liquid, water in an amount needed to realize the above-described ratio was added to the mixed liquid, and then the resultant mixture was mixed with a ball mill using a resin ball including an iron core at a rotation speed of 220 rpm for 48 hours to obtain a dispersion liquid. Next, gelatin was added to the dispersion liquid in an amount needed to realize the above-described ratio, and then mixing was performed for 20 minutes, thereby obtaining a silicon carbide particle dispersion liquid (application liquid) of Example 4.

Next, a honeycomb-structured base material formed from cordierite was immersed in the silicon carbide particle dispersion liquid. Then, the base material was pulled up, and was dried at 100°C for 12 hours, thereby forming an applied and dried layer formed from the palladium-salt-carrying silicon carbide particles on the base material.

Next, the base material on which the applied and dried layer was formed was subjected to a heat treatment under the following conditions.

First step: temperature = 850°C, retention time = 240 minutes, and atmosphere = argon

Second step: temperature = 800°C, retention time = 360 minutes, and atmosphere = air

Through this heat treatment, formation of a porous layer by partial sintering of the silicon carbide particles, formation of palladium (noble metal) fine particles by reduction and decomposition of palladium nitrate carried on the surface of the silicon carbide particles, and formation of a surface oxide layer of the silicon carbide particles were performed, thereby preparing a porous layer that contained the catalyst of Example 4.

In the exhaust purification catalyst that was obtained, a palladium fine particle having an average primary particle size of 20 nm was carried on the surface of the silicon carbide particles. In addition, an oxide layer, which was formed from an amorphous compound (SiOₓ, provided that, 0<x≤3) containing silicon and oxygen in combination and an amorphous compound (SiO_{y}C_{z}, provided that, 0<y≤3 and 0<z≤3) containing silicon, oxygen, and carbon in combination, was formed on the surface of the silicon carbide particles, and the palladium fine particle was coated with the oxide layer. In addition, as is the case with Example 1, from the FE-TEM image, it was discovered that the oxide layer was an amorphous substance.

The specific surface area and the average porosity of the porous layer containing the catalyst were 4 m²/g and 55%, respectively.

In addition, the CO purification temperature and the HC purification temperature, which were measured using the exhaust emission control device, were 205°C and 209°C, respectively.

Further, the specific surface area, the CO purification temperature, and the HC purification temperature after the heat treatment at 700°C were 3 m²/g, 221°C, and 235°C, respectively.

These results are collectively shown in Table 2.

### [Example 5]

15 g of silicon carbide particles having an average primary particle size of 0.030 µm was added to a dispersion medium in which ammonium polycarboxylate as a surfactant and a deforming agent were dissolved in 80 g of pure water, and in this state, a dispersion treatment using zirconia beads as a dispersive medium was performed for 180 minutes.

An aqueous solution of dinitro-platinate was added to the resultant slurry, which was obtained, in such a manner that platinum became 0.1 g on the basis of 1 g of silicon carbide particles, and a dispersion treatment using zirconia beads as the dispersive medium was performed again for 30 minutes, thereby obtaining a slurry.

Silicon carbide particles having an average primary particle size of 10.0 µm were added to the slurry that was obtained, thereby preparing a mixed liquid in which an amount of platinum was adjusted to be 0.005 g on the basis of 1 g of the silicon carbide particles in the slurry.

Water and gelatin were added to the mixed liquid in such a manner that the content ratio of the silicon carbide particles became 30.0% by volume, the content ratio of water became 67.5% by volume, and the content ratio of gelatin used as a gelating agent became 2.5% by volume, thereby adjusting a silicon carbide particle dispersion liquid of Example 5. First, ammonium polycarboxylate as a surfactant was added to the mixed liquid, water in an amount needed to realize the above-described ratio was added to the mixed liquid, and then the resultant mixture was mixed with a ball mill using a resin ball including an iron core at a rotation speed of 220 rpm for 48 hours to obtain a dispersion liquid. Next, gelatin was added to the dispersion liquid in an amount needed to realize the above-described ratio, and then mixing was performed for 20 minutes, thereby obtaining a silicon carbide particle dispersion liquid (application liquid) of Example 5.

Next, a honeycomb-structured base material formed from cordierite was immersed in the silicon carbide particle dispersion liquid. Then, the base material was pulled up, and was dried at 100°C for 12 hours, thereby forming an applied and dried layer formed from the platinum-salt-carrying silicon carbide particles on the base material.

Next, the base material on which the applied and dried layer was formed was subjected to a heat treatment under the following conditions.

First step: temperature = 1000°C, retention time = 120 minutes, and atmosphere = argon

Second step: temperature = 730°C, retention time = 60 minutes, and atmosphere = air

Through this heat treatment, formation of a porous layer by partial sintering of the silicon carbide particles, formation of platinum (noble metal) fine particles by reduction and decomposition of dinitro-platinate carried on the surface of the silicon carbide particles, and formation of a surface oxide layer of the silicon carbide particles were performed, thereby preparing a porous layer that contained the catalyst of Example 5.

In the exhaust purification catalyst that was obtained, a platinum fine particle having an average primary particle size of 1 nm was carried on the surface of the silicon carbide particles. In addition, an oxide layer, which was formed from an amorphous compound (SiOₓ, provided that, 0<x≤3) containing silicon and oxygen in combination and an amorphous compound (SiO_{y}C_{z}, provided that, 0<y≤3 and 0<z≤3) containing silicon, oxygen, and carbon in combination, was formed on the surface of the silicon carbide particles, and the platinum fine particle was coated with the oxide layer. In addition, as is the case with Example 1, from the FE-TEM image, it was discovered that the oxide layer was an amorphous substance.

The specific surface area and the average porosity of the porous layer containing the catalyst were 1 m²/g and 51%, respectively.

In addition, the CO purification temperature and the HC purification temperature, which were measured using the exhaust emission control device, were 220°C and 227°C, respectively.

Further, the specific surface area, the CO purification temperature, and the HC purification temperature after the heat treatment at 700°C were 1 m²/g, 241°C, and 248°C, respectively.

These results are collectively shown in Table 2.

### [Comparative Example 1]

15 g of silicon carbide particles having an average primary particle size of 0.035 µm was added to a dispersion medium in which ammonium polycarboxylate as a surfactant and a deforming agent were dissolved in 80 g of pure water, and in this state, a dispersion treatment using zirconia beads as a dispersive medium was performed for 180 minutes.

An aqueous solution of dinitro-platinate was added to the resultant slurry, which was obtained, in such a manner that platinum became 0.01 g on the basis of 1 g of silicon carbide particles, and a dispersion treatment using zirconia beads as the dispersive medium was performed again for 30 minutes. Then, evaporation and drying were performed to prepare platinum-salt-carrying silicon carbide particles.

Next, the platinum-salt-carrying silicon carbide particles, water, and gelatin used as a gelating agent were weighed in content ratios of 10.0% by volume, 87.5% by volume, and 2.5% by volume. Next, the platinum-salt-carrying silicon carbide particles and water were mixed with a ball mill using a resin ball including an iron core at a rotation speed of 220 rpm for 12 hours to obtain a dispersion liquid. Then, the gelatin was added to the dispersion liquid that was obtained and mixing was performed for 20 minutes to obtain a silicon carbide particle dispersion liquid (application liquid) of Comparative Example 1.

Next, a honeycomb-structured base material formed from cordierite was immersed in the silicon carbide particle dispersion liquid. Then, the base material was pulled up, and was dried at 100°C for 12 hours, thereby forming an applied and dried layer formed from the platinum-salt-carrying silicon carbide particles on the base material.

Next, the base material on which the applied and dried layer was formed was subjected to a heat treatment under the following conditions, thereby preparing a porous layer that contained the catalyst of Comparative Example 1.

First step: temperature = 980°C, retention time = 70 minutes, and atmosphere = argon

Second step: temperature = 450°C, retention time = 30 minutes, and atmosphere = air

In the exhaust purification catalyst that was obtained, a platinum fine particle having an average primary particle size of 1 nm was carried on the surface of the silicon carbide particles. In addition, an oxide layer was not formed on the surface of the silicon carbide particles, and thus the platinum fine particle was not also coated with the oxide layer.

The specific surface area and the average porosity of the porous layer containing the catalyst were 38 m²/g and 73%, respectively.

In addition, the CO purification temperature and the HC purification temperature, which were measured using the exhaust emission control device, were 283°C and 291°C, respectively.

Further, the specific surface area, the CO purification temperature, and the HC purification temperature after the heat treatment at 700°C were 36 m²/g, 300°C, and 302°C, respectively.

These results are collectively shown in Table 2.

### [Comparative Example 2]

15 g of silicon carbide particles having an average primary particle size of 0.015 µm was added to a dispersion medium in which ammonium polycarboxylate as a surfactant and a deforming agent were dissolved in 80 g of pure water, and in this state, a dispersion treatment using zirconia beads as a dispersive medium was performed for 180 minutes.

An aqueous solution of dinitro-platinate was added to the resultant slurry, which was obtained, in such a manner that platinum became 0.05 g on the basis of 1 g of silicon carbide particles, and a dispersion treatment using zirconia beads as the dispersive medium was performed again for 30 minutes. Then, evaporation and drying were performed to prepare platinum-salt-carrying silicon carbide particles.

Next, the platinum-salt-carrying silicon carbide particles were subjected to a heat treatment under the following conditions. Through the heat treatment, formation of platinum (noble metal) fine particles by reduction and decomposition of dinitro-platinate carried on the surface of the silicon carbide particles was performed, thereby forming the noble-metal-carrying silicon carbide particles. In addition, a first step corresponds to a drying process.

First step: temperature = 120°C, retention time = 24 hours, and atmosphere = air

Second step: temperature = 1000°C, retention time = 30 minutes, and atmosphere = argon

Third step: temperature = 450°C, retention time = 240 minutes, and atmosphere = air

Next, the noble-metal-carrying silicon carbide particles, water, and gelatin used as a gelating agent were weighed in content ratios of 26.0% by volume, 73.0% by volume, and 1.0% by volume. Next, the noble-metal-carrying silicon carbide particles and water were mixed with a ball mill using a resin ball including an iron core at a rotation speed of 220 rpm for 48 hours to obtain a dispersion liquid. Then, the gelatin was added to the dispersion liquid that was obtained and mixing was performed for 20 minutes to obtain a silicon carbide particle dispersion liquid (application liquid) of Comparative Example 2.

Next, a honeycomb-structured base material formed from aluminum titanate was immersed in the silicon carbide particle dispersion liquid. Then, the base material was pulled up, and was dried at 100°C for 12 hours, thereby forming an applied and dried layer formed from the noble-metal-carrying silicon carbide particles on the base material.

Next, the base material on which the applied and dried layer was formed was subjected to a heat treatment under the following conditions, thereby preparing a porous layer that contained the catalyst of Comparative Example 2.

First step: temperature = 1000°C, retention time = 30 minutes, and atmosphere = argon

Second step: temperature = 550°C, retention time = 120 minutes, and atmosphere = air

In the exhaust purification catalyst that was obtained, a platinum fine particle having an average primary particle size of 1.5 nm was carried on the surface of the silicon carbide particles. In addition, an oxide layer was not formed on the surface of the silicon carbide particles, and thus the platinum fine particle were also not coated with the oxide layer.

The specific surface area and the average porosity of the porous layer containing the catalyst were 83 m²/g and 68%, respectively.

In addition, the CO purification temperature and the HC purification temperature, which were measured using the exhaust emission control device, were 261°C and 276°C, respectively.

Further, the specific surface area, the CO purification temperature, and the HC purification temperature after the heat treatment at 700°C were 80 m²/g, 296°C, and 302°C, respectively.

These results are collectively shown in Table 2.

### [Comparative Example 3]

15 g of silicon carbide particles having an average primary particle size of 0.030 µm was added to a dispersion medium in which ammonium polycarboxylate as a surfactant and a deforming agent were dissolved in 80 g of pure water, and in this state, a dispersion treatment using zirconia beads as a dispersive medium was performed for 180 minutes.

An aqueous solution of dinitro-platinate was added to the resultant slurry, which was obtained, in such a manner that platinum became 0.1 g on the basis of 1 g of silicon carbide particles, and a dispersion treatment using zirconia beads as the dispersive medium was performed again for 30 minutes, thereby obtaining a slurry.

Silicon carbide particles having an average primary particle size of 10.0 µm were added to the slurry that was obtained, thereby preparing a mixed liquid in which the amount of platinum was adjusted to be 0.005 g on the basis of 1 g of the silicon carbide particles in the slurry.

Water and gelatin were added to the mixed liquid in such a manner that the content ratio of the silicon carbide particles became 30.0% by volume, the content ratio of water became 67.5% by volume, and the content ratio of gelatin used as a gelating agent became 2.5% by volume, thereby adjusting a silicon carbide particle dispersion liquid of Comparative Example 3. First, ammonium polycarboxylate as a surfactant was added to the mixed liquid, water in an amount needed to realize the above-described ratio was added to the mixed liquid, and then the resultant mixture was mixed with a ball mill using a resin ball including an iron core at a rotation speed of 220 rpm for 48 hours to obtain a dispersion liquid. Next, gelatin was added to the dispersion liquid in the amount needed to realize the above-described ratio, and then mixing was performed for 20 minutes, thereby obtaining a silicon carbide particle dispersion liquid (application liquid) of Comparative Example 3.

Next, a honeycomb-structured base material formed from cordierite was immersed in the silicon carbide particle dispersion liquid. Then, the base material was pulled up, and was dried at 100°C for 12 hours, thereby forming an applied and dried layer formed from the platinum-salt-carrying silicon carbide particles on the base material.

Next, the base material on which the applied and dried layer was formed was subjected to a heat treatment under the following conditions, thereby preparing a porous layer that contained the catalyst of Comparative Example 3.

First step: temperature = 1000°C, retention time = 360 minutes, and atmosphere = argon

Second step: temperature = 500°C, retention time = 360 minutes, and atmosphere = air

In the exhaust purification catalyst that was obtained, a platinum fine particle having an average primary particle size of 3 nm was carried on the surface of the silicon carbide particles. In addition, an oxide layer was not formed on the surface of the silicon carbide particles, and thus the platinum fine particle was not also coated with the oxide layer.

The specific surface area and the average porosity of the porous layer containing the catalyst were 1 m²/g and 51%, respectively.

In addition, the CO purification temperature and the HC purification temperature, which were measured using the exhaust emission control device, were 255°C and 264°C, respectively. Further, the specific surface area, the CO purification temperature, and the HC purification temperature after the heat treatment at 700°C were 1 m²/g, 277°C, and 295°C, respectively.

These results are collectively shown in Table 2.

**[Table 2]**

| | Noble metal | Oxide layer | Initial value | | | After heat treatment at 700°C | | | Porosity (%) |
|---|---|---|---|---|---|---|---|---|---|
| | | | Specific surface area (m²/g) | CO T50 (°C) | HC T50 (°C) | Specific surface area (m²/g) | CO T50 (°C) | HC T50 (°C) | |
| Example 1 | Pt | SiOₓ (0<x≤3), | 39 | 173 | 186 | 36 | 183 | 199 | 75 |
| | | SiO_{y}C_{z} (0<y≤3) 0<z≤3) | | | | | | | |
| Example 2 | Pt | SiOₓ (0<x≤3), | 85 | 169 | 179 | 81 | 178 | 192 | 89 |
| | | SiO_{y}C_{z} (0<y≤3, 0<z≤3) | | | | | | | |
| Example 3 | Pt | SiOₓ (0<x≤3), | 13 | 179 | 183 | 11 | 188 | 201 | 68 |
| | | SiO_{y}C_{z} (0<y≤3, 0<z≤3) | | | | | | | |
| Example 4 | Pt | SiOₓ (0<x≤3), | 4 | 205 | 209 | 3 | 221 | 235 | 55 |
| | | SiO_{y}C_{z} (0<y≤3, 0<z≤3) | | | | | | | |
| Example 5 | Pt | SiOₓ (0<x≤3), | 1 | 220 | 227 | 1 | 241 | 248 | 51 |
| | | SiO_{y}C_{z} (0<y≤3, 0<z≤3) | | | | | | | |
| Comparative Example 1 | Pt | Oxide film is not formed | 38 | 283 | 291 | 36 | 300 | 302 | 73 |
| Comparative Example 2 | Pt | Oxide film is not formed | 83 | 261 | 276 | 80 | 296 | 302 | 68 |
| Comparative Example 3 | Pt | Oxide film is not formed | 13 | 255 | 264 | 11 | 277 | 295 | 51 |

In the exhaust purification catalysts of Examples 1 to 5, a nanometer-sized noble metal fine particle was carried on the surface of the silicon carbide particles, an oxide layer was formed on the surface of the silicon carbide particle, and the noble metal fine particle was coated with the oxide layer.

In exhaust emission control devices using the exhaust purification catalysts of Examples 1 to 4 among these catalysts, the CO purification temperature was as low as 169°C to 205°C, the HC purification temperature was as low as 179°C to 209°C, and these purification temperatures did not depend on the specific surface area of the exhaust purification catalysts. From these results, it was confirmed that a sufficient purification effect on CO and HC was obtained.

Further, after the heat treatment at 700°C, the CO purification temperature was increased only by approximately 10°C to 15°C, and the HC purification temperature was increased only by approximately 10°C to 25°C in comparison a case before treatment. From these results, it was confirmed that a sufficient purification effect on CO and HC was maintained even after the heat treatment at 700°C.

Next, in an exhaust emission control device using the exhaust purification catalyst of Example 5, the CO purification temperature was 220°C, and the HC purification temperature was 227°C. From these results, it was discovered that these purification temperatures were lower in comparison to Comparative Example, but were higher in comparison to other Examples. In addition, after the heat treatment at 700°C, the CO purification temperature was 241°C and the HC purification temperature was 248°C. From these results, it was discovered that these temperatures were lower in comparison to Comparative Examples, but a temperature rising rate was higher in comparison to other Examples.

The reason for the above result is considered as follows. Since lots of silicon carbide particles in Example 5 have an average primary particle size of 10 µm, and thus the specific surface area of the porous layer is as low as 1 m², and as a result, the catalytic activity is lower in comparison to other Examples and the specific surface area after the heat treatment at 700°C is small. Accordingly, sintering (grain growth) between noble metal particles progresses.

That is, it was discovered that in Example 5, a sufficient purification effect on CO and HC was confirmed, but the effect was slightly lower in comparison to other Examples.

On the other hand, in the exhaust purification catalysts of Comparative Examples 1 to 3, as is the case with Examples, a nanometer-sized noble metal fine particle was carried on the surface of the silicon carbide particle, but the oxide layer was not formed on the surface of the silicon carbide particle, and as a result, the noble metal fine particles were exposed without being coated with the oxide layer.

In the exhaust emission control device using the exhaust purification catalyst of Comparative Examples 1 to 3, the CO purification temperature was 255°C to 283°C, and the HC purification temperature was 264°C to 291°C. These purification temperatures were higher by approximately 50°C to 110°C in comparison to Examples, and it was determined that a sufficient purification effect on CO and HC was not obtained.

### (Second Embodiment)

Hereinafter, a second embodiment for carrying out an exhaust gas purification filter of the invention will be described.

In addition, this embodiment makes a description in detail for easy comprehension of the gist of the invention, and does not limit the invention unless otherwise stated.

### [Exhaust Gas Purification Filter]

The exhaust gas purification filter of the second embodiment of the invention will be described. Here, a DPF having a sealed-type honeycomb structure formed from ceramics, which is an exhaust gas purification filter used in a diesel engine for a vehicle, will be described as an example.

The exhaust gas purification filter of this embodiment is an exhaust gas purification filter which purifies an exhaust gas by allowing particulate matter contained in the exhaust gas to pass through a filter base body formed from a porous substance to trap the particulate matter. The filter base body includes a partition wall that is formed from a porous substance, an inflow-side gas flow passage which is formed by the partition wall and in which an inflow-side end for an exhaust gas that contains particulate matter is opened, and an outflow-side gas flow passage which is provided at a position different from that of the inflow-side gas flow passage of the filter base body and is formed by the partition wall and in which an outflow-side end for the exhaust gas is opened. A porous film having a pore size smaller than that of the partition wall is formed on a surface of the partition wall at least on an inflow-side gas flow passage side, and the porous film contains silicon carbide particles and noble metal fine particles, and the noble metal particles, which are carried on the surface of the silicon carbide particles, are carried in a state of being coated with an oxide layer.

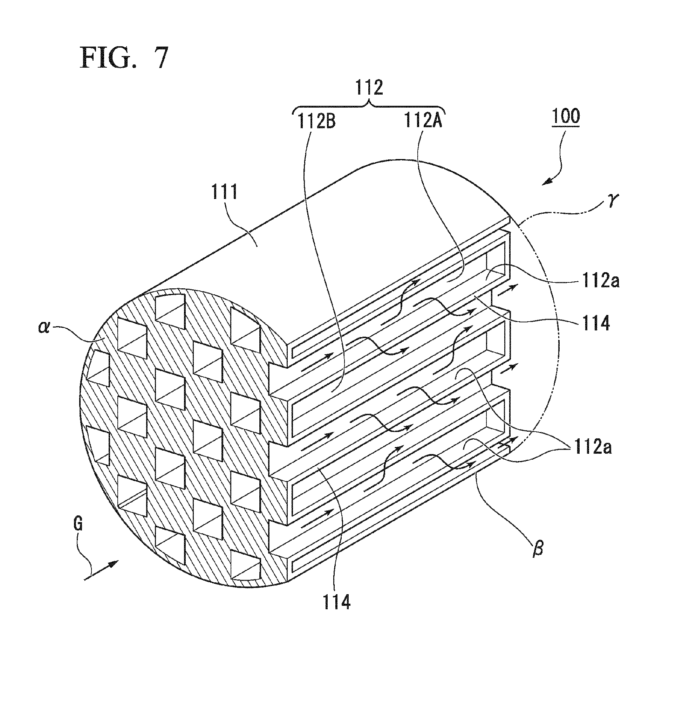

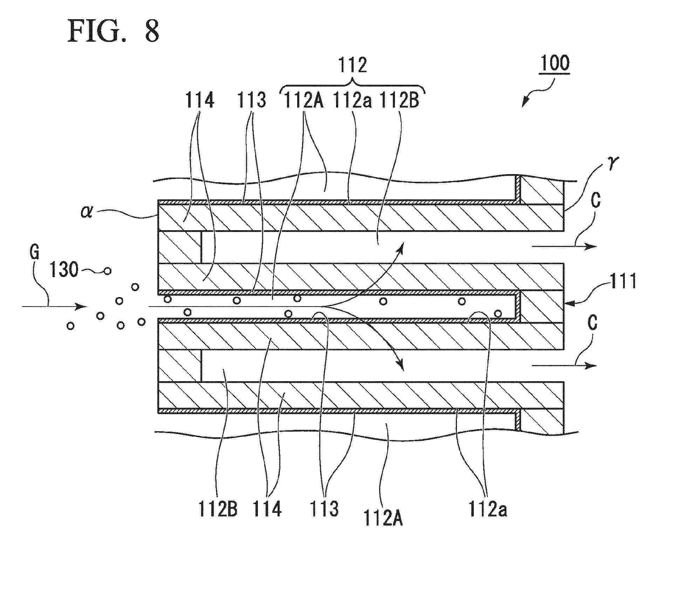

FIG. 7 is a partially broken perspective view illustrating a DPF that is an example of the exhaust gas purification filter of an embodiment of the invention, and FIG. 8 is a cross-sectional view illustrating a partition wall structure of the DPF in a plane indicated by a symbol β in FIG. 7.

As shown in FIG. 7, the DPF 100 is an exhaust gas purification filter that purifies the exhaust gas G by allowing the exhaust gas G to pass through the filter base body 111 formed from cylindrical porous ceramics having a plurality of pores to trap particulate matter (PM) contained in the exhaust gas G. In addition, it is not necessary for the DPF to have a cylindrical shape, and the DPF may have a shape such as a prism shape or an elliptical cylinder shape.

Gas flow passages 112 are formed in the filter base body 111, and the gas flow passages 112 have a structure in which an upstream side end and a downstream side end are alternately closed when seen in a flow direction of the exhaust gas G (longitudinal direction). That is, the gas flow passages 112 include an inflow cell (inflow-side gas flow passage) 112A into which the exhaust gas G flows and in which an exhaust gas G inflow-side end is opened, the exhaust gas G containing particulate matter, and an outflow cell (outflow-side gas flow passage) 112B which is formed at a position different from the inflow cell 112A and in which an exhaust gas G outflow-side end is opened. In each of the gas flow passages 112, a porous film 113 is formed on an inner wall surface 112a of the inflow cell 112A in which an exhaust gas G upstream-side end (inflow-side end) is opened.

In addition, in both end faces of the filter base body 111 in an axial direction, one end face α is an inflow face into which the exhaust gas G containing particulate matter flows, and the other end face γ is an outflow face from which a purified gas C after removing the particulate matter from the exhaust gas G is discharged.

A flow of the exhaust gas in the DPF 100 is illustrated in FIG. 8.

The exhaust gas G, which contains PM 130 and is introduced from the inflow face side, that is, the end face α side, flows into the inside of the DPF 100 from the inflow cell 112A of which an inflow face is opened, and passes through a partition wall 114 of the filter base body 111 during flowing through the inside of the inflow cell 112A from the end face α side to the end face γ side. At this time, the PM 130 contained in the exhaust gas G is trapped and removed by the porous film 113 that is provided on the inner wall surface 112a (surface of a partition wall 114 that constitutes the inflow cell 112A) of the inflow cell 112A. The purified gas C, from which the particulate matter 130 is removed, flows through the inside of the outflow cell 112B from the end face α side to the end face γ side, and is discharged to the outside of the filter from an opening end (end face γ) of the outflow cell 112B.

The filter base body 111 is a honeycomb structure formed from heat-resistant porous ceramics such as silicon carbide, cordierite, aluminum titanate, and silicon nitride. The partition wall 114, which extends along an axial direction that is a flow direction of the exhaust gas G, is formed in the filter base body 111, and axial hollow regions surrounded by the partition wall 114 are the cell-shaped gas flow passages 112 constituted by a plurality of the inflow cells 112A and a plurality of the outflow cells 112B.

Here, the "honeycomb structure" in this embodiment represents the following structure. That is, the plurality of inflow cells 112A and the plurality of outflow cells 112B are formed in the filter base body 111 to be parallel with each other, and the inflow cells 112A and the outflow cells 112B are formed in such a manner that one side surrounds the other side, and an opening end of one side and an opening end of the other side are opposite to each other.

Here, a cross-sectional shape in a direction perpendicular to an axial direction of the inflow cell 112A and the outflow cell 112B, that is, the cross-sectional shape of the gas flow passage 112 is set to a rectangular shape, but the cross-sectional shape is not limited to a rectangular shape, and may be set to various shapes including a polygonal shape such as a hexagonal shape, a circular shape, an elliptical shape, and the like. In addition, in the gas flow passage 112 formed in the vicinity of the outer periphery of the filter base body 111, a part of the cross-sectional shape is an arc shape. However, the gas flow passage 112 having a cross-sectional shape, which confirms to an outer shape of the filter base body 111, is configured to dispose the gas flow passage 112 to the vicinity of the outer periphery of the filter base body 111 without a gap.

The average pore size of the partition wall 114 formed from the porous ceramics is preferably 5 µm to 50 µm. When the average pore size is less than 5 µm, pressure loss due to the partition wall 114 itself increases, and thus this pore size is not preferable. On the other hand, when the average pore size exceeds 50 µm, there is a concern that the strength of the partition wall 114 is not sufficient and it is difficult to form the porous film 113 on the partition wall 114, and thus this pore size is not preferable.

In addition, the porous film 113 is a porous film which is formed on the inner wall surface 112a of the inflow cell 112A and which has a pore size smaller than the pore size of the partition wall 114. The porous film 113 is formed on the inner wall surface 112a of the inflow cell 112A as an independent film without entering the inside of the pores of the porous ceramics that constitutes the partition wall 114 of the filter base body 111. That is, the porous film 113 is formed on the inner wall surface 112a of the inflow cell 112A in a state of intruding only to the inlet portion of the pores formed in the partition wall 114. In addition, the porous film 113 has a plurality of pores, and these pores communicate with each other. As a result, the porous film 113 is formed from a filter-shaped porous substance having penetration holes.

Next, the porous film 113 will be described in detail.

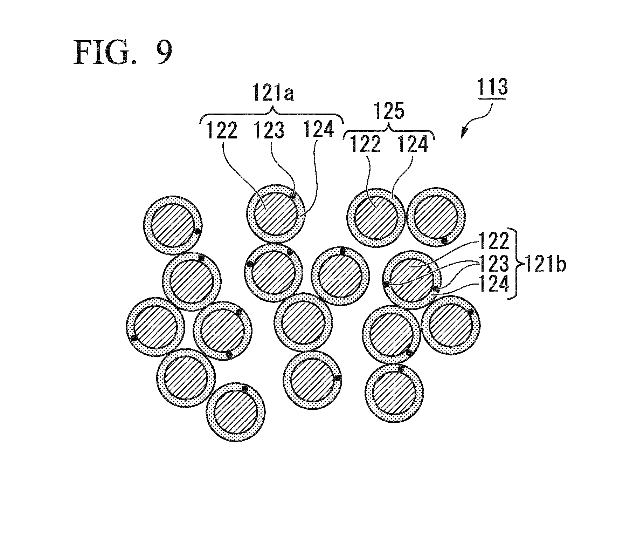

FIG. 9 is a schematic view illustrating the porous film 113 of this embodiment. With regard to porous film 113, a plurality of kinds of noble-metal-carrying silicon carbide particles 121a and 121b, and surface-coated silicon carbide particles 125 agglomerate and the entirety of these particles form a porous film shape.

Here, in the noble-metal-carrying silicon carbide particle 121a, a noble metal particle 123 is carried on a surface of a silicon carbide particle 122, and the noble metal particle 123 is carried on the surface of the silicon carbide particle 122 in a state of being coated with an oxide layer 124.

In addition, in the noble-metal-carrying silicon carbide particle 121b, two noble metal particles 123 are carried on the surface of the silicon carbide particle 122, and the noble metal particles 123 are carried on the surface of the silicon carbide particle 122 in a state of being coated with the oxide layer 124.

The number of the noble metal particles 123, which are carried by the noble-metal-carrying silicon carbide particle may be 3 or more other than 1 or 2.

On the other hand, in each of the surface-coated silicon carbide particles 125, the surface of the silicon carbide particle 122 is coated with the oxide layer 124, and the noble metal particle 123 is not carried on the surface of the silicon carbide particle 122.

As described above, the porous film 113 may be constituted by a mixture of the noble-metal-carrying silicon carbide particles 121a and 121b, and the surface-coated silicon carbide particle 125 on which the noble metal particle 123 is not carried. The porous film 113 may be constituted by only the noble-metal-carrying silicon carbide particles 121a and 121b, or may contain a noble-metal-carrying silicon carbide particle on which three or more noble metal particles 123 are carried.

Further, the noble-metal-carrying silicon carbide particle or the surface-coated silicon carbide particle may contain at least one kind of element selected from group 3 elements to group 14 elements such as silicon (Si), aluminum (Al), boron (B), zirconium (Zr), and titanium (Ti), or oxides thereof, carbides thereof, and nitrides thereof as necessary. These may be contained alone or in a combination manner. In addition, in a case of containing other components, the percentage of silicon carbide is preferably 80% by volume or more, and is more preferably 90% by volume or more.

The noble-metal-carrying silicon carbide particles 121a and 121b serve as a combustion catalyst when combusting and removing trapped PM during regeneration of the DPF 100, and has an effect of improving combustion efficiency such as lowering of a combustion temperature and shortening of a combustion time.

In the related art, it is known that the noble metal particle has the catalytic operation. In addition, the details will be described later, but it is known that the "oxides of silicon carbide" that constitutes the oxide layer 124 exhibits oxygen release and also has the same catalytic operation. Accordingly, when the noble metal particle 123 and the oxide layer 124 are combined, it is considered that a relatively higher catalytic operation, that is, an effect such as further lowering of the combustion temperature or further shortening of the combustion time is provided.

From the viewpoint of the combustion catalytic operation, even in a case where the surface-coated silicon carbide particle 131 on which the noble metal particle is not carried is present, it is preferable that the oxide layer 124 be formed on the surface thereof.

With regard to the effect of having the catalytic effect, the porous film 113 may not have a complete film shape, and may include a porous agglomerate shape. In addition, the noble-metal-carrying silicon carbide particles 121a and 121b may be disposed in the porous film 113 in a dispersed manner, may be disposed in an agglomerated shape, or may be disposed as a continuous film-shaped structure. In any case, the porous film 113 serves as a catalytic layer. In addition, the porous film 113 may include not only the noble-metal-carrying silicon carbide particles 121a and 121b, but also other catalytic particles, inorganic particles, or metal particles.

On the other hand, in the exhaust gas purification filter (DPF 100) of this embodiment, it is preferable that PM be trapped by the porous film 113. This is because when PM is trapped by the porous film 113, the trapped PM and the noble-metal-carrying silicon carbide particles 121a and 121b that are PM combustion catalyst come into close contact with each other, and thus the catalytic operation is exhibited effectively.

As described above, it is necessary for the porous film 113 to be formed on the inner wall surface 112a of the inflow cell 112A as an independent film without excessively entering the inside of the pores of the porous ceramics that constitutes the partition wall 114 of the filter base body 111. In addition, it is necessary for the porous film 113 to have an average pore size smaller than the average pore size of the partition wall 114. Specifically, the average pore size of the porous film 113 is preferably 0.05 µm to 3 µm, and more preferably 0.07 µm to 2.5 µm. The reason for the limitation is as follows. In a case where the average pore size of the porous film 113 is less than 0.05 µm, when the exhaust gas that contains the particulate matter 130 flows into the exhaust gas purification filter (DPF 100), pressure loss increases. On the other hand, in a case where the average pore size of the porous film 113 exceeds 3 µm, the pore size of the porous film 113 and the pore size of the partition wall 114 become substantially the same as each other, and thus PM trapping properties of the porous film 113 deteriorate. In addition to this deterioration, in a case of performing a regeneration treatment of the DPF 100, PM combustion efficiency is not improved.

In addition, average porosity of the porous film 113 is preferably 50% to 90%, and more preferably 60% to 85%. The reason for the limitation is as follows. When the average porosity of the porous film 113 is less than 50%, the average porosity of the porous film 113 becomes equal to or less than the porosity of the partition wall 114, and thus an increase in the pressure loss may be caused. On the other hand, when the average porosity of the porous film 113 exceeds 90%, there is a concern that it is difficult to maintain the structure or strength of the porous film.

The thickness (film thickness) of the porous film 113 is preferably 60 µm or less at a site planarly overlapping a vacant portion provided to the partition wall 114 on the inner wall surface 112a, and 5 µm to 60 µm at a site planarly overlapping a solid portion of the partition wall 114 on the inner wall surface 112a.

Here, the "vacant portion" represents an opening in which a pore in the partition wall 114 is opened on the inner wall surface 112a, and the base material that supports the porous film 113 is not present below the porous film 113. In addition, the "solid portion" represents a portion other than the vacant portion, that is, a portion in which the ceramics material that constitutes the partition wall 114 is present on the inner wall surface 112a.

The reason of the limitation on the film thickness is as follows. When the film thickness of the porous film 113 is in the above-described range, the pores are sufficiently present in the porous film, and thus an air flow on the porous film surface becomes substantially uniform without depending on the state of the partition wall 114. Accordingly, the pressure loss is reduced, and the PM 130 is uniformly trapped on the porous film 113, and thus satisfactory filter characteristics are maintained.

Further, even in the filter regeneration treatment, a combustion gas that combusts the trapped PM 130 may uniformly flow with respect to the PM 130 that is deposited, and thus the combustion efficiency is improved.

However, when the thickness of the porous film 113 is less than 5 µm, the thickness of the porous film 113 is small, and thus the number of pores in the porous film 113 substantially decreases. As a result, an air flow amount on the surface of the porous film 113 decreases at a site in which the porous film 113 planarly overlapping the solid portion of the partition wall 114, the air flow on the porous film surface becomes non-uniform. As a result, the pressure loss increases, or the trapping of the PM 130 becomes non-uniform, and thus there is a concern that the trapping efficiency decreases or the number of regeneration treatments increases.

In addition, similarly, since the number of the pores in the porous film 113 is small, even during the filter regeneration treatment, the flow of the combustion gas that combusts the trapped PM 130 becomes non-uniform, and thus there is a concern that the combustion efficiency of the PM 30 may not be improved.

On the other hand, when the thickness of the porous film 113 exceeds 60 µm, the pressure loss due to the porous film 113 becomes excessive, and thus there is a concern that an engine output decreases. Accordingly, this thickness range is not preferable.

The thickness of the porous film 113 is preferably 35 µm or less at the vacant portion and 7 µm to 35 µm at the solid portion, and more preferably 30 µm or less at the vacant portion and 10 µm to 30 µm at the solid portion.

Here, with regard to the silicon carbide particles 122 that constitute the porous film 113, the lower limit of the average primary particle size is preferably 0.01 µm. The reason for the limitation is as follows. When the average primary particle size of the silicon carbide particles is less than 0.01 µm, the pore size of the porous film 113 that is obtained is too small, and thus there is a concern that the pressure loss in the DPF 100 increases. In addition, sintering (grain growth) between the silicon carbide particles progresses and the particle size increases during use of the exhaust gas purification filter at a high temperature. As a result, a catalytic active site decreases, and thus this thickness range is not preferable. The lower limit is more preferably 0.02 µm, and still more preferably 0.035 µm.

On the other hand, as conditions for defining the maximum value of the average primary particle size, there are two kinds of conditions including a case where the characteristics of a filter are a main factor, and a case where combustion catalytic operation is a main factor. In the two cases, the maximum values are different from each other.

First, in a case where the filter characteristics are the main factor, the maximum value of the average primary particle size is preferably 10 µm. The reason for the limitation is as follows. When the maximum value of the average primary particle size exceeds 10 µm, the pore size of the porous film 113 that is obtained becomes too large, and thus the PM 130 trapping properties decreases, or the PM 130 passes through the porous film 113 and is trapped inside the pore of the partition wall 114, and thus the combustion efficiency is not improved during the filter regeneration treatment. Accordingly, this maximum value is not preferable. In a case where the filter characteristics are the main factor, the upper limit is preferably 7 µm, and is more preferably 5 µm.

Next, in a case where the combustion catalytic operation is the main factor, the maximum value of the average primary particle size is preferably 5 µm. The reason for the limitation is as follows. When the average primary particle size exceeds 5 µm, the specific surface area of the silicon carbide particle 122 decreases, and thus when the noble metal particle is carried thereon, the distance between noble metal particles is reduced. As a result, sintering (grain growth) between the noble metal particles progresses during use of the exhaust gas purification filter at a high temperature, and the catalytic activity decreases, thus this maximum value is not preferable.

The upper limit in a case of setting the combustion catalytic operation as the main factor is preferably 3 µm, and is more preferably 1 µm.

Accordingly, the maximum value of the average primary particle size may be selected depending on the use or purpose of the DPF 100.

With regard to the silicon carbide particles, examples of a method of obtaining nanometer-sized particles include a thermal plasma method using thermal plasma which has a high temperature and high activity in a non-oxidizing atmosphere and which is easy for introduction to a high-speed cooling process. This manufacturing method is useful as a method of manufacturing silicon carbide nanoparticles which have an average primary particle size of approximately 5 nm to 100 nm and which have excellent crystallinity. When a raw material with high purity is selected, it is possible to obtain silicon carbide nanoparticles in which the amount of impurities is very small.

In addition, a silica precursor sintering method may be exemplified. This method is a method of obtaining silicon carbide particles by baking a mixture of a material such as an organic silicon compound, silicon sol, and silicic acid hydrogel which contain silicon, a material such as a phenol resin which contains carbon, and a metal compound of lithium and the like which suppresses grain growth of silicon carbide under a non-oxidizing atmosphere.

In addition, examples of a method of obtaining silicon carbide particles having a size distribution from submicron to micron (micrometer) include industrial methods such as an Acheson process, a silica reduction method, and a silicon carbonization method. In addition, these methods are already industrially established, and thus a description thereof will not be repeated here.

The noble metal particles 123, which are carried on the surface of the silicon carbide particles 121, preferably contain one or two or more kinds of elements selected from a group consisting of platinum (Pt), gold (Au), silver (Ag), ruthenium (Ru), rhodium (Rh), palladium (Pd), osmium (Os), and iridium (Ir).

The average primary particle size of the noble metal particles 123 is preferably 1 nm to 50 nm, is more preferably 1 nm to 30 nm, and is still more preferably 1 nm to 10 nm.

Here, the reason as to why the average primary particle size is limited to 1 nm to 50 nm is as follows. When the average primary particle size is less than 1 nm, the particle size is too small and thus surface activity becomes too strong. Therefore, agglomeration tends to occur, and thus this range is not preferable. On the other hand, when the average primary particle size exceeds 50 nm, the noble metal particles are not coated with the oxide layer that is present on a surface of each of the silicon carbide particles, and thus the noble metal particles protrude from the oxide layer toward the outside and are exposed. As a result, there is a concern that catalytic characteristics deteriorate, and that the catalytic activity at a low temperature decreases, and thus this range is not preferable.

The oxide layer 124 is an oxide layer which allows the noble metal particle 123 to be carried on the surface of the silicon carbide particles 122 and which is generated on the noble metal particles 123 and the silicon carbide particles 122 through oxidation in an oxidizing atmosphere.

The oxide layer 124 has a function of maintaining the noble metal particles 123 on the surface of the silicon carbide particles 122. Accordingly, the oxide layer 124 suppresses migration of the noble metal particles 123 under a high-temperature environment, and can prevent a decrease in a surface area due to sintering (grain growth) of the noble metal particles 123.

It is preferable that the oxide layer 124 be formed from one or two selected from a group consisting of amorphous SiOₓ (provided that, 0<x≤3) and amorphous SiO_{y}C_{z} (provided that, 0<y≤3 and 0<z≤3). In addition, it is not necessary for amorphous SiOₓ and amorphous SiO_{y}C_{z} to have a single composition, and at each portion of the oxide layer 124, x, y, and z may vary in the above-described range in an arbitrary manner. Further, the oxide layer may further contain one or two or more crystalline substances selected from a group consisting of SiO₂ (silica), SiO, SiOC₃, SiO₂C₂, and SiO₃C. However, the oxide layer 124 has a too small thickness and is contained in a trace amount, and thus it is difficult to confirm whether or not a crystalline substance is contained in the oxide layer 124. In addition, in the following description, substances that form the oxide layer 124 may be collectively described as "oxides of silicon carbide."

In the oxides of silicon carbide, it is preferable to contain a silicon carboxide that tends to form a bond with each of the noble metal particles, in other words, a compound that contains silicon, carbon, and oxygen in combination with each other. When the silicon carboxide forms a bond with the noble metal particles, migration of the noble metal particles is prevented, and thus the sintering prention effect is further improved. In addition, it is known that the melting point of the noble metal particle 123 becomes lowered from miniaturization. However, when the silicon carboxide forms a bond with the noble metal particle, melting of the noble metal particle 123 can be prevented.

Examples of the silicon carboxide include crystalline SiOC₃, SiO₂C₂, and SiO₃C in addition to amorphous SiO_{y}C_{z} (provided that, 0<y≤3 and 0<z≤3). In addition, the silicon carboxide may contain silicon, carbon, and oxygen in combination with each other, and may include a composition other than the above-described composition.

In addition, it is known that the oxides of silicon carbide which constitute the oxide layer 124 exhibit oxygen release. It is considered that the noble metal particle 123 that is carried promotes an increase in an oxygen release amount in the oxides of silicon carbide and lowering of an oxygen release temperature. Accordingly, even in a low temperature region in which a reaction rate of a catalytic reaction depends on the number of active sites, oxygen released from the oxides of silicon carbide tends to act as the active site due to an auxiliary operation of the noble metal particle. As a result, high combustion catalytic activity can be obtained, and thus it is considered that PM combustion properties in a low-temperature region are improved.

### [Method of Manufacturing Exhaust Gas Purification Filter]

The method of manufacturing the exhaust gas purification filter of this embodiment includes a mother material preparing process of preparing the silicon carbide particles as the mother material, a noble metal particle carrying process of carrying the noble metal particles on the silicon carbide particles, a porous film forming process of carrying the silicon carbide particles on a partition wall which constitutes a filter base body and is formed from a porous substance to form a porous substance, and an oxide layer forming process of forming an oxide layer on the surface of the silicon carbide particles.

A sequence of these four processes may be selected in an arbitrary sequence as long as the following conditions are satisfied. That is, the mother material preparing process is performed first, and it is necessary for the oxide layer forming process to be performed with respect to the silicon carbide particles on which the noble metal particle is carried (not performed with respect to a silicon carbide particle alone). In addition, here, the reason as to why it is necessary for the oxide layer forming process to be performed with respect to the silicon carbide particles on which the noble metal particle is carried is that even when the noble metal particle is carried after forming the oxide layer on the silicon carbide particles, sufficient oxidizing catalytic characteristics cannot be obtained.

In addition, the noble metal carrying process and the porous film forming process have similar processes such as dissolution or dispersion in a solvent (dispersion medium), drying and removal of the solvent (dispersion medium), and a heat treatment, and thus both processes may be simultaneously performed in parallel with each other.

As described above, in the method of manufacturing the exhaust gas purification filter of this embodiment, the following four process sequences may be selected. In addition, here, the mother material preparing process is [A], the noble metal particle carrying process is [B], the porous film forming process is [C], and the oxide layer forming process is [D].

In addition, it is assumed that a case of performing a subsequent process after an arbitrary process is indicated by "→ (right arrow) ", and a case of simultaneously performing two processes is indicated by "=".

### (1) [A]→[B]→[C]→[D]

In this method, the noble-metal-particle-carrying silicon carbide particles are formed, and the porous film is formed using the silicon carbide particles, and then the surface oxide layer is formed.

### (2) [A]→[B]→[D]→[C]

In this method, after forming the silicon carbide particles on which the noble metal particle is carried and the surface oxide layer is formed, the porous film is formed using the silicon carbide particles.

### (3) [A]→[C]→[B]→[D]

In this method, after forming the porous film using the silicon carbide particles as the mother material, the noble metal particles are carried on the porous film, and then the surface oxide layer is formed.

### (4) [A]→[B]=[C]→[D]

Carrying of the noble metal particle on the silicon carbide particles as the mother material, and formation of the porous film using the silicon carbide particles as the mother material are simultaneously performed, and then the surface oxide layer is formed on the noble-metal-particle-carrying silicon carbide porous film that is obtained.

Next, the respective processes will be described in detail.

### "Mother Material Preparing Process"

In this process, the silicon carbide particles as the mother material are prepared.

The average primary particle size of the silicon carbide particles may be selected in a range of 0.01 µm to 10 µm in accordance with characteristics of the exhaust gas purification filter which are demanded. When the silicon carbide particles are nanometer-sized particles, the silicon carbide particles may be obtained using the above-described methods, that is, the thermal plasma method, the silica precursor baking method, and the like. When the silicon carbide particles are particles having a size distribution from submicron to micron (micrometer), the silicon carbide particles may be obtained using the Acheson process, the silica reduction method, the silicon carbonization method, and the like.

### "Noble Metal Particle Carrying Process"

In this process, the noble metal particles are carried on the surface of the silicon carbide particles as the mother material, or on the surface of the silicon carbide particles in the porous film formed from the silicon carbide particles, thereby forming the noble-metal-carrying silicon carbide particles or a porous film formed from the noble-metal-carrying silicon carbide particles.

First, a solution in which noble metal salts as sources of the noble metal are dissolved, or a dispersion liquid in which noble metal compound fine particles are dispersed is prepared. As a solvent or dispersion medium, water is preferable. However, in a case where the noble metal sources are decomposed in water and precipitate, an organic solvent may be used. As the organic solvent, a polar solvent is preferable, and alcohols, ketones, and the like are appropriately used.

Next, the silicon carbide particles are immersed and dispersed in the solution or the dispersion liquid, or the porous film formed from the silicon carbide particles is immersed in the solution or the dispersion liquid and is dried at a temperature of approximately 60°C to 250°C to remove the water or the dispersion medium. According to this, the noble metal salts or the noble metal compound fine particles may be attached to the surface of the silicon carbide particles (including particles forming the porous film).

Next, the porous film or the silicon carbide particles to which the noble metal salts or the noble metal compound fine particles are attached is subjected to a heat treatment in a reducing atmosphere including hydrogen, carbon monoxide, and the like, or in an inert atmosphere such as nitrogen, argon, neon, xenon, and the like, thereby reducing and decomposing the noble metal salts or the noble metal compound to form the noble metal fine particle. A heat treatment temperature or a heat treatment time may be appropriately selected depending on the kinds of the noble metal sources, atmospheric conditions, and the like. However, typically, the heat temperature is set to be in a range of 500°C to 1500°C, and the heat treatment time is set to be in a range of 10 minutes to 24 hours. In addition, a temperature higher than necessary and time longer than necessary may cause sintering of the silicon carbide particles or sintering of the noble metal particles that are generated, and thus are not preferable. According to the above-described processes, it is possible to obtain the silicon carbide particles in which the noble metal fine particles are carried on a surface, or the porous film formed from the silicon carbide particles in which the noble metal fine particles are carried on a surface.

Examples of the noble metal sources, which are used in the processes, include salts or compounds which contain one or two or more noble metal elements selected from a group consisting of platinum (Pt), gold (Au), silver (Ag), ruthenium (Ru), rhodium (Rh), palladium (Pd), osmium (Os), and iridium (Ir) which are noble metal particles, for example, chlorides, sulfates, nitrates, organic acid salts, complex (complex salts), hydroxides, and the like.

### "Porous Film Forming Process"

The porous film forming process includes a process of dispersing any one of the silicon carbide particles as the mother material, the noble-metal-particle-carrying silicon carbide particles, and the silicon carbide particles on which the noble metal particle is carried and in which the surface oxide layer is formed in the dispersion medium to prepare a silicon carbide particle dispersion liquid, and a process of applying (coating) the silicon carbide particle dispersion liquid on the partition wall which constitutes the filter base body and is formed from a porous substance, performing drying, and partially sintering the silicon carbide particles to form a porous film.

First, any one of the silicon carbide particles, the noble-metal-particle-carrying silicon carbide particles, and the silicon carbide particles, on which the noble metal particle is carried and in which the surface oxide layer is formed, is dispersed in the dispersion medium to prepare a silicon carbide particle dispersion liquid.

As the dispersion medium, any dispersion medium may be used as long as this dispersion medium can uniformly disperse silicon carbide particles, and water or an organic solvent is appropriately used. In addition, an elementary substance of a polymeric monomer or an oligomer or a mixture of these may be used as necessary.

Examples of the organic solvent that is appropriately used include alcohols such as methanol, ethanol, 1-propanol, 2-propanol, diacetone alcohol, furfuryl alcohol, ethylene glycol, and hexylene glycol; esters such as acetic acid methyl ester and acetic acid ethyl ester; ethers such as diethyl ether, ethylene glycol monomethyl ether (methyl cellosolve), ethylene glycol monoethyl ether (ethyl cellosolve), ethylene glycol monobutyl ether (butyl cellosolve), diethylene glycol monomethyl ether, diethylene glycol monoethyl ether, dioxane, and tetrahydrofuran; ketones such as acetone, methyl ethyl ketone, acetylacetone, and acetoacetic ester; acid amides such as N,N-dimethylformamide; aromatic hydrocarbon such as toluene and xylene; and the like. These solvents may be used alone or two or more kinds thereof may be mixed and used.

As the polymeric monomer, an acryl-based monomer or methacryl-based monomer such as methyl acrylate and methyl methacrylate, an epoxy-based monomer, and the like may be used. In addition, as the oligomer, urethane acrylate-based oligomer, epoxy acrylate-based oligomer, acrylate-based oligomer, and the like may be used.

A dispersing agent (surface treatment agent), a surfactant, a preservative, a stabilizing agent, a defoaming agent, a leveling agent, and the like may be appropriately added to the dispersion liquid to secure dispersion stability or to improve application property. An added amount of the dispersing agent, the surfactant, the preservative, the stabilizing agent, the defoaming agent, and the leveling agent is not particularly limited, and addition may be performed depending on an addition purpose.

As a device that is applicable to a carrier preparing process, for example, a kneader, a roll mill, a pin mill, a sand mill, a ball mill, and a planetary ball mill, and the like are exemplary examples, but the sand mill, the ball mill, and the planetary ball mill, and the like are preferable to disperse the silicon carbide particle in the dispersion medium using a dispersive medium.

In addition, examples of the dispersive medium such as a ball include a resin-covered body including a metal core formed from steel, lead, and the like is formed, a sintered body of an inorganic oxide such as alumina, zirconia, silica, and titania, a sintered body of a nitride such as silicon nitride, a sintered body of a silicide such as silicon carbide, glass such as soda glass, lead glass, and high specific gravity glass, but as the dispersive medium that is used in this embodiment, from the viewpoints of mixing and dispersing efficiency, zirconia having a specific gravity 6 or more, the resin-covered body including the core formed from steel, and the like are preferable.

Next, the silicon carbide particle dispersion liquid is applied onto the partition wall formed from the porous substance, and is dried to form a coated film on the partition wall. In addition, the coated film may be formed by immersing the partition wall formed from the porous substance in the silicon carbide particle dispersion liquid, and by pulling up and drying the partition wall.

As a method of applying the dispersion liquid, it is possible to use typical wet coating methods such as a bar coat method, a slip cast method, a wash coat method, and a dip coat method in which the dispersion liquid is applied onto a surface of an object to be processed, and the like.

At this time, the viscosity of the dispersion liquid, wetting properties of the dispersion liquid on the partition wall, an agglomeration state of the silicon carbide particles, and the like are controlled in order for the dispersion liquid not to enter the inside of the pores in the partition wall, whereby it is possible to form an independent porous film formed from the silicon carbide particles on the partition wall. In addition, in a case where the dispersion liquid enters the inside of the pores in the partition wall, a reduction in a pore size or porosity in the partition wall is caused, and thus a problem of an increase in the pressure loss, and the like occur, and thus this case is not preferable.

In addition, the drying, that is, removal of the water or organic solvent may be performed in the atmospheric atmosphere at a temperature of approximately 100°C to 250°C.

Next, the partition wall in which the coated film of the silicon carbide particles is formed and which is formed from the porous substance is subjected to a heat treatment under an inert atmosphere such as nitrogen, argon, neon, and xenon, or in a reducing atmosphere such as hydrogen and carbon monoxide at a temperature of 500°C to 1500°C, and preferably 600°C to 1100°C.

According to this heat treatment, the dispersion medium in the coated film, that is, the water or the organic solvent that remains, or the polymeric monomer or the oligomer in a dried film, or an additive such as the dispersing agent, the surfactant, the preservative, the stabilizing agent, the defoaming agent, and the leveling agent in the dried film is scattered, and the silicon carbide particles are partially sintered to form a neck portion in which the particles are bonded to each other, whereby a porous film bonded in a porous substance shape is formed.

In addition, the drying of the dispersion liquid may be integrated with a heat treatment process as a previous stage of the heat treatment process.

In addition, this heat treatment process may be omitted as long as the oxide layer may be formed on the surface of the silicon carbide particle and silicon carbide particles may be partially sintered by adjusting heat treatment conditions in the oxide layer forming process.

### (Case of Simultaneously Performing Noble Metal Particle Carrying Process and Porous Film Forming Process)

The noble metal particle carrying process and the porous film forming process are similar processes, and thus both processes may be simultaneously performed in parallel with each other

First, the process of preparing the solution in which the noble metal salts as the source of the noble metal are dissolved, or the dispersion liquid in which noble metal compound fine particles are dispersed in the noble metal particle carrying process, and the process of preparing the dispersion medium in the porous film forming process are similar to each other. In addition, the process of immersing and dispersing the silicon carbide particle in the solution or the dispersion liquid in the noble metal particle carrying process and the process of preparing the silicon carbide particle dispersion liquid in the porous film forming process are similar to each other.

Accordingly, these processes may be collectively performed in a single process by dissolving or dispersing the noble metal sources in the silicon carbide particle dispersion medium in the porous film forming process.

In addition, as the dispersion medium, it is necessary to select a substance in which the noble metal sources can be easily dissolved or dispersed, and particularly, water may be appropriately used. On the other hand, in a case of using the organic solvent and the like, noble metal sources that are easily dispersed in the organic solvent may be selected.

Next, the porous film forming process includes a process of applying (coating) the silicon carbide particle dispersion liquid on the partition wall which constitutes the filter base body and is formed from the porous substance, but the noble metal particle carrying process does not include a corresponding process.

Next, the process of removing the water or the dispersion medium, which is a solvent, for drying in the noble metal particle carrying process, and the process of drying the partition wall which is formed from the porous substance and to which the silicon carbide particle dispersion liquid is applied in the porous film forming process are similar to each other.

These both processes are drying processes and are substantially the same processes, and thus these processes may be performed in a single process. A drying temperature may be set to be in a range that is common to both processes, that is, a temperature of approximately 100°C to 250°C.

Next, the process of forming the noble metal fine particle by performing the heat treatment in the reducing atmosphere or the inert atmosphere in the noble metal particle carrying process, and the process of forming the porous film by subjecting the partition wall in which the applied and dried film is formed and which is formed form the porous substance to the heat treatment in the reducing atmosphere or the inert atmosphere to allow the partition wall to be partially sintered in the porous film forming process are similar to each other.

Since the both processes are substantially the same processes from the viewpoint of performing the heat treatment in the reducing atmosphere or the inert atmosphere, these processes may be performed in a single process. A heat treatment temperature or a heat treatment time may be selected in a range common to the both processes in consideration of noble metal particle generation conditions or porous film forming conditions.

When performing the above-described processes, that is, the process of dissolving or dispersing the noble metal sources in the dispersion medium, the process of dispersing the silicon carbide particle in the dispersion medium, the process of applying the silicon carbide particle dispersion liquid that is obtained to the partition wall which constitutes the filter base body and is formed from the porous substance, the process of drying the coated film that is obtained, and the process of subjecting the dried and coated film that is obtained to the heat treatment, the noble metal particle carrying process is integrated in the porous film forming process. Accordingly, it is possible to simultaneously perform the noble metal particle carrying process and the porous film forming process in parallel with each other as an integrated process.

### "Oxide Layer Forming Process"

In this process, the silicon carbide particles on which the noble metal particle is carried, or the porous film formed from the noble-metal-particle-carrying silicon carbide particles is subjected to an oxidizing treatment to form an oxide layer on the surface of the noble-metal-particle carrying silicon carbide particles.

With regard to the oxidizing treatment, the noble-metal-carrying silicon carbide particles themselves, or the partition wall, which is formed form the porous substance and which includes the porous film formed from the noble-metal-particle-carrying silicon carbide particles, that is, a layer in which noble-metal-carrying silicon carbide particles are partially sintered, is subjected to the oxidizing treatment in an oxidizing atmosphere such as the air and oxygen at a temperature of 600°C to 1000°C and preferably 650°C to 800°C for 0.5 hours to 36 hours and preferably 4 hours to 12 hours, thereby forming an oxide layer on the surface of the silicon carbide particles.

According to this, it is possible to form the silicon carbide catalyst particle in which the noble metal particle is carried on a surface of the silicon carbide particle and the noble metal particle is coated with the oxide layer, or the porous film formed from the silicon carbide particle in which the noble metal particle is carried on the surface of the silicon carbide particle, and the noble metal particle is coated with the oxide layer. That is, when the oxide layer is formed under the above-described conditions, and the average primary particle size of the noble metal particle is 50 nm or less, it is possible to form a catalyst particle having high catalytic activity in which the noble metal particle is completely coated with the oxide layer without being protruded from the oxide layer.

According to the above-described processes, it is possible to manufacture the DPF that is the exhaust gas purification filter of this embodiment.

As described above, according to the exhaust gas purification filter of this embodiment, the silicon carbide particle 122 and the noble metal particle 123 are contained in the inner wall surface 112a of the partition wall 114 formed from the porous substance on the inflow-cell 112A side, and the porous film 113, in which the noble metal particle 123 is carried on the surface of the silicon carbide particle 121 in a state of being coated with the oxide layer 124, is formed. In addition, the porous film 113 has a pore size smaller than that of the partition wall 114, and has high porosity and a predetermined film thickness. According to this operation effect, the exhaust gas purification filter of this embodiment has high performance as described below.

First, in the porous film 113, the noble metal particle 123 is present as a fine particle which is highly dispersed (has large specific surface area), and thus the noble metal particle 123 may exhibit catalytic activity peculiar to the fine particle.

Here, grain growth of the fine noble metal particle progresses from a relatively low temperature in a typical case. However, the noble metal particle 123 of this embodiment is coated with the oxide layer 124 on the surface of the silicon carbide particle 122.

The oxide layer 124 is formed from the "oxides of silicon carbide", and can form a bond with the noble metal particle, and thus sintering (grain growth) of the noble metal particle may be prevented. Particularly, since "silicon carboxide" which tends to form a bonding with the noble metal particle is contained, the effect of preventing the sintering of the noble metal particle further increases.

In addition, it is known that in fine noble metal particle 123, the melting point thereof decreases, but melting of the noble metal particle 123 may be reduced due to chemical bonding with the oxide layer 124, particularly, SiOₓC_{y} silicon carboxide.

In addition, it is known that the oxides of silicon carbide which are contained in the oxide layer 124 exhibit oxygen release. It is considered that the noble metal particle 123 that is carried promotes an increase in an oxygen release amount in the oxides of silicon carbide and lowering of an oxygen release temperature. Accordingly, even in a low temperature region in which a reaction rate of a catalytic reaction depends on the number of active sites, it is considered that oxygen released from the oxides of silicon carbide tends to act as the active site due to an auxiliary operation of the noble metal particle.

Further, the silicon carbide is stable at a high temperature, and thus grain growth is less likely to occur in comparison to oxide particles. According to this, the surface area of the oxides of silicon carbide is easily maintained, and thus the decrease in the amount of oxygen release does not occur. As a result, even after the exhaust gas purification filter of this embodiment is used for a long period of time at a high temperature, the catalytic activity is easily maintained.

As described above, the exhaust gas purification filter of this embodiment has high catalytic effect with respect to the PM combustion, and can maintain the combustion catalytic effect for a long period of time.

Next, the porous film 113 has high PM 130 trapping properties, and the most of PM 130 is trapped on the surface of the porous film 113, and does not enter the pores in the porous film 113 or the partition wall 114. That is, the most of the PM 130 is trapped by surface layer filtration, and is not trapped by deep layer filtration. Accordingly, it is possible to prevent the pores from being clogged due to the PM, and thus it is possible to prevent an increase in the pressure loss due to the clogging while maintaining the PM trapping efficiency.

In addition, due to the presence of the porous film 113 having a predetermined thickness, the flow of the exhaust gas G on the surface of the porous film 113 becomes substantially uniform without depending on the state of the partition wall 114, and thus the PM 130 is uniformly trapped on the porous film 113. Accordingly, the pressure loss is reduced and thus satisfactory filter characteristics are maintained.

As described above, the exhaust gas purification filter of this embodiment has high PM trapping properties and low pressure loss, and can maintain these characteristics.

Next, with regard to a reproducing treatment of combusting and removing the PM 130 that is trapped and deposited in the exhaust gas purification filter of this embodiment, since the PM 130 is directly trapped on the porous film 113 having an combustion catalytic effect and a contact area between the PM 130 and the porous film 113 is large, the catalytic effect can be sufficiently obtained. Further, since the PM 130 is uniformly trapped on the porous film 113, a combustion gas is uniformly supplied to the PM that is deposited, and thus the PM is uniformly combusted. According to this, PM combustion and removal may be performed at a low temperature and in a short time.

Particularly, when the catalytic effect is high, the PM combustion can be performed at a temperature of the exhaust gas during a typical operation of a diesel engine, and thus special operation for the regeneration treatment is not necessary, and thus continuous PM combustion can be performed.

Further, the PM 130, which is trapped in the pores of the porous film 113 or the partition wall 114, causes rapid combustion, thereby partially causing rapid temperature rising in the exhaust gas purification filter, and thus deterioration or breakage of the exhaust gas purification filter is caused. However, in the exhaust gas purification filter of this embodiment, the PM 130 is trapped by the surface filtration, and is not present in the pores of the porous film 113 or the partition wall 114, and thus the above-described problem does not occur.

As described above, the exhaust gas purification filter of this embodiment can prevent an increase in the pressure loss while maintaining high PM trapping properties. In addition, lowering of a PM combustion temperature or shortening of a PM combustion time during the filter regeneration may be realized, and thus durability of the filter is improved. In addition, continuous regeneration is also possible.

Accordingly, in a vehicle that is provided with the exhaust gas purification filter of this embodiment, it is possible to continuously combust the PM while maintaining high PM trapping properties and low pressure loss, and maintaining PM combustion efficiency. As a result, it is possible to provide a vehicle which is excellent in exhaust gas purification properties and is also excellent in driving performance with low power consumption and low cost.

### [Examples]

Hereinafter, the invention will be described in detail with reference to Examples and Comparative Examples, but the invention is not limited to these Examples. In addition, as a honeycomb-structured base material formed from silicon carbide in the following Examples and Comparative Examples, a base material having an average pore size of 12 µm and average porosity of 45% at the partition wall was used.

### [Each Measurement and Evaluation Method]

First, a description will be made with respect to an evaluation method in the exhaust gas purification filters of Examples and Comparative Examples.

### (1) Composition of Oxide Layer

The porous film in the filter base body was cut for each honeycomb base material and was measured by using an X-ray photoelectric analyzer (XPS/ESCA) (Sigma Probe, manufactured by VG-Scientific Co.) to perform surface composition analysis with respect to a surface of a SiC particle that forms the porous film.

### (2) Carried State of Noble Metal Particle and Average Primary Particle Size

The porous film in the filter base body was cut for each honeycomb base material, and was observed by using a field emission transmission electron microscope (FE-TEM) (JEM-2100F, manufactured by Japan Electronic Co., Ltd) to evaluate a carried state of the noble metal particle.

In addition, with regard to the average primary particle size of the noble metal particle, the primary particle sizes of 500 noble metal particles, which were randomly selected from an observed image obtained in the same manner, were measured, and the average value thereof was set to the average primary particle size of the noble metal particle.

### (3) Pore Size and Average Porosity of Porous Film

A pore size distribution at a porous film portion in the filter base body was measured using a mercury porosimeter (Pore Master 60GT, manufactured by Quantachrome Co., Ltd.), and 50% accumulation of mercury entrance volume was used as the average pore size of the porous film. In addition, the average porosity of the porous film was measured by the same mercury porosimeter.

### (4) PM Combustion Test

### (A) Preparation of Evaluation Sample

A test specimen having dimensions of 4.5 mm × 4.5 mm × 7 mm was cut from the filter base body by using a diamond cutter. The test specimen has a honeycomb body cell opening (in a cross-sectional direction of a gas flow passage) of 4.5 mm × 4.5 mm, and a honeycomb body cell length (gas flow passage length) of 7 mm, and the test specimen is configured by nine (3x3) gas flow passages. In addition, in the nine gas flow passages, the porous film was not present in a total of five gas passages on the center and on four corners, and the porous film was formed on a surface of the partition wall that constitutes the remaining four gas flow passages.

Next, among the gas flow passages of the test specimen, with respect to the gas flow passage in which the porous film was formed on the surface of the partition wall, an exhaust gas outlet side was covered with a heat-resistant sealing material, and with respect to a gas flow passage in which the porous film was not formed, an exhaust gas inlet side was covered with the heat-resistant sealing material to obtain the shape of the exhaust gas purification filter, and then this test specimen was used an evaluation sample.

### (B) PM Trapping

As a PM generation source, a lamp in which a diesel oil was filled was used. After stabilizing a flame, an exhaust gas containing PM was sucked from a base portion of a diffused flame, and this exhaust gas was allowed to flow through the evaluation sample, and the PM was deposited on the evaluation sample.

### (C) PM Combustion Test

A high-temperature mixed gas of oxygen and nitrogen was allowed to flow to the evaluation sample on which the PM was deposited, and a temperature of the evaluation sample was increased to combust the PM in the evaluation sample.

Each flow rate of oxygen and nitrogen in the mixed gas was controlled using a mass flow meter. The flow rate of oxygen was set to be in a range of 200 ml/minute, and the flow rate of nitrogen was set to be in a range of 2800 ml/minute (at room temperature) . The mixed gas was heated to 775°C to 850°C, and was allowed to flow through the evaluation sample.

With respect to gas after passing through the evaluation sample, an amount of CO and an amount of CO₂ were continuously measured by an infrared-type gas concentration measuring device to perform gas analysis along with the PM combustion. In addition, a thermocouple was inserted in the gas flow passage of the evaluation sample on a gas discharge side to measure a temperature of the evaluation sample.

From these results, the evaluation sample temperature at which the concentration of CO and CO₂ is maximized was used as the PM combustion temperature.

### (5) Oxygen Desorption Temperature

To confirm the oxygen adsorption and desorption behavior in the silicon carbide particle which constitutes the porous film of the exhaust gas purification filters of Examples and Comparative Examples, on which the noble metal particle is carried and the oxide layer is formed, an oxygen desorption temperature was measured. Here, measurement using the following two methods was performed with respect to respective samples manufactured in the same manner as Examples and Comparative Examples except that the process of forming the porous film on the honeycomb-structured base material (formation of an application liquid and formation of a coated film on the base material) was omitted so as to obtaine a powder sample.

### (A) Hydrogen Temperature Programmed Reduction (H₂-TPR)

A temperature of oxygen release from silicon carbide particle was measured using a catalyst evaluation device (Bell CAT B, manufactured by Japan BEL Co., Ltd.). First, a sample was subjected to a pre-treatment in a mixed gas of oxygen (5% by volume) and helium (remainder) at 800°C for one hour to allow oxygen to be adsorbed to the silicon carbide particles. Then, the temperature was lowered to room temperature. Subsequently, the temperature of the sample was increased to 800°C in a mixed gas of hydrogen (5% by volume) and argon (remainder) at a rate of 10°C/minute, and a generated gas was analyzed using a thermal conductivity detector to measure hydrogen consumption (oxygen release) temperature in the silicon carbide particles.

### (B) Vacuum Thermal Desorption Spectrometry (TDS)

As a method of confirming the oxygen desorption behavior of the silicon carbide particles in vacuum, thermal desorption spectrometry was performed. First, a sample was subjected to a pre-treatment in a mixed gas of oxygen (10% by volume) and nitrogen (remainder) for one hour to allow oxygen to be adsorbed to the silicon carbide particles. Here, an adsorption temperature was set to two kinds of 25°C and 600°C. Then, the temperature of the sample which was subjected to the pre-treatment at 600°C was lowered to room temperature. Subsequently, each sample was disposed in a measurement container, and a temperature was increased in vacuum to 1100°C at a rate of 40°C/minute, the amount of generated oxygen was measured using a four pile polar mass spectrometer to confirm temperature dependency of the oxygen desorption behavior.

### [Example 6]

15 g of silicon carbide particles having an average primary particle size of 0.035 µm was added to a dispersion medium in which ammonium polycarboxylate as a surfactant and a deforming agent were dissolved in 80 g of pure water, and in this state, a dispersion treatment using zirconia beads as a dispersive medium was performed for 180 minutes.

An aqueous solution of dinitro-platinate was added to the resultant slurry, which was obtained, in such a manner that platinum became 0.01 g on the basis of 1 g of silicon carbide particles, and a dispersion treatment using zirconia beads as the dispersive medium was performed again for 30 minutes. Then, evaporation and drying were performed to prepare platinum-salt-carrying silicon carbide particles.

Next, the platinum-salt-carrying silicon carbide particles, water, and gelatin used as a gelating agent were weighed in content ratios of 10.0% by volume, 87.5% by volume, and 2.5% by volume. Next, the platinum-salt-carrying silicon carbide particles and water were mixed with a ball mill using a resin ball including an iron core at a rotation speed of 220 rpm for 12 hours to obtain a dispersion liquid. Then, the gelatin was added to the dispersion liquid that was obtained and mixing was performed for 20 minutes to obtain a silicon carbide particle dispersion liquid (application liquid) of Example 6.

Next, a honeycomb-structured base material formed from silicon carbide was immersed in the silicon carbide particle dispersion liquid. Then, the base material was pulled up, and was dried at 100°C for 12 hours, thereby forming a coated film formed from the platinum-salt-carrying silicon carbide particles on the base material.

Next, the base material on which the coated film was formed was subjected to a heat treatment under the following conditions.

First step: temperature = 980°C, retention time = 80 minutes, and atmosphere = argon

Second step: temperature = 730°C, retention time = 360 minutes, and atmosphere = air

Through this heat treatment, formation of a porous film by partial sintering of the silicon carbide particles, formation of platinum (noble metal) fine particles by reduction and decomposition of dinitro-platinate carried on the surface of the silicon carbide particles, and formation of a surface oxide layer of the silicon carbide particles were performed, thereby preparing a filter base body of Example 6.

In the filter base body that was obtained, the porous film formed from the silicon carbide particles was formed on the honeycomb base material, and a platinum fine particle having an average primary particle size of 3 nm was carried on the surface of the silicon carbide particles. Further, an oxide layer, which was formed from an amorphous compound (SiOₓ, provided that, 0<x≤3) containing silicon and oxygen in combination and an amorphous compound (SiO_{y}C_{z}, provided that, 0<y≤3 and 0<z≤3) containing silicon, oxygen, and carbon in combination, was formed on the surface of the silicon carbide particles, and the platinum fine particle was coated with the oxide layer.

In addition, the average pore size of the porous film was 0.1 µm, and the average porosity was 75%.

The oxygen desorption temperature by H₂-TPR was 335°C, and the PM combustion temperature was 350°C.

These results are collectively shown in Table 3.

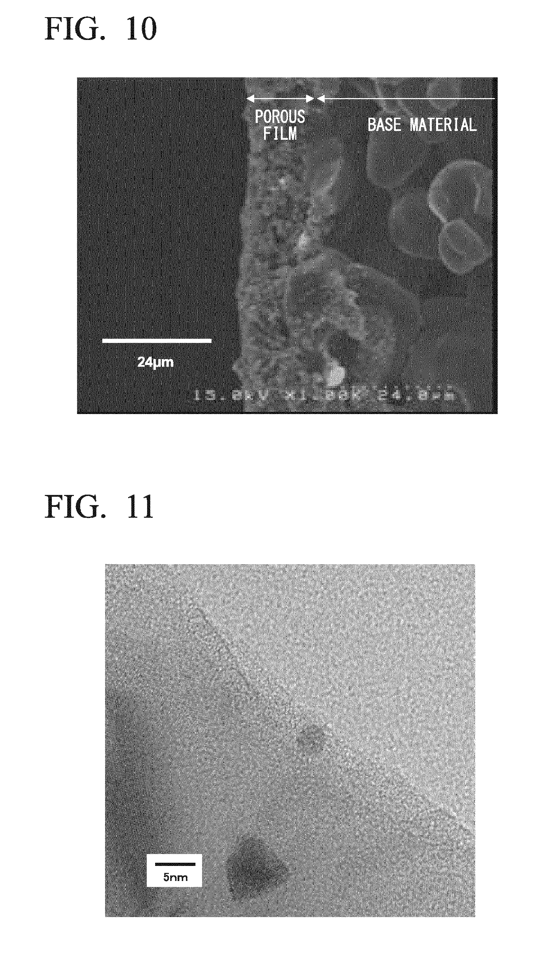

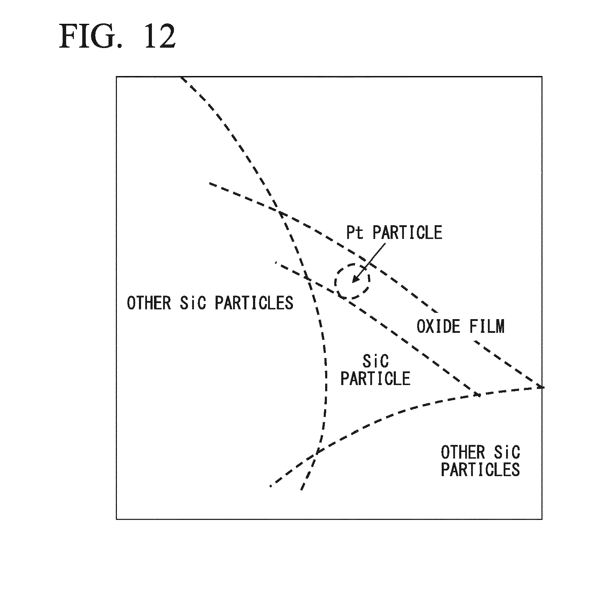

FIG. 10 is a scanning electron microscope image (SEM image) of the porous film of Example 6, FIG. 11 is an FE-TEM image of the porous film, and FIG. 12 is an explanatory view illustrating a structure of the porous film of FIG. 11.

According to the drawings, it can be seen that in the noble-metal-carrying silicon carbide particles, the noble metal particle (platinum particle) was carried on the surface of the silicon carbide particles, and the noble metal particle (platinum particle) was carried on the surface of the silicon carbide particles in a state of being coated with the oxide layer (oxide film). In addition, in the FE-TEM image, a crystal lattice image was not recognized in the oxide layer (oxide film), and thus it was discovered that the oxide layer (oxide film) was an amorphous substance.

### [Example 7]

15 g of silicon carbide particles having an average primary particle size of 0.030 µm was added to a dispersion medium in which ammonium polycarboxylate as a surfactant and a deforming agent were dissolved in 80 g of pure water, and in this state, a dispersion treatment using zirconia beads as a dispersive medium was performed for 180 minutes.

An aqueous solution of silver nitrate was added to the resultant slurry, which was obtained, in such a manner that silver became 0.1 g on the basis of 1 g of silicon carbide particles, and a dispersion treatment using zirconia beads as the dispersive medium was performed again for 30 minutes. Then, evaporation and drying were performed to prepare silver-salt-carrying silicon carbide particles.

Next, the silver-salt-carrying silicon carbide particles, water, and gelatin used as a gelating agent were weighed in content ratios of 10.0% by volume, 87.5% by volume, and 2.5% by volume. Next, the silver-salt-carrying silicon carbide particles and water were mixed with a ball mill using a resin ball including an iron core at a rotation speed of 220 rpm for 12 hours to obtain a dispersion liquid. Then, the gelatin was added to the dispersion liquid that was obtained, and mixing was performed for 20 minutes, thereby obtaining a silicon carbide particle dispersion liquid (application liquid) of Example 7.

Next, a honeycomb-structured base material formed from silicon carbide was immersed in the silicon carbide particle dispersion liquid. Then, the base material was pulled up, and was dried at 100°C for 12 hours, thereby forming a coated film formed from the silver-salt-carrying silicon carbide particles on the base material.

Next, the base material on which the coated film was formed was subjected to a heat treatment under the following conditions.

First step: temperature = 500°C, retention time = 60 minutes, and atmosphere = nitrogen

Second step: temperature = 600°C, retention time = 36 hours, and atmosphere = air

Through this heat treatment, formation of a porous film by partial sintering of the silicon carbide particles, formation of silver (noble metal) fine particles by reduction and decomposition of silver nitrate carried on the surface of the silicon carbide particles, and formation of a surface oxide layer of the silicon carbide particles were performed, thereby preparing a filter base body of Example 7.

In the filter base body that was obtained, a porous film formed from silicon carbide particles was formed on the honeycomb base material, and the silver fine particle having an average primary particle size of 50 nm was carried on the surface of the silicon carbide particles. In addition, an oxide layer, which was formed from an amorphous compound (SiOₓ, provided that, 0<x≤3) containing silicon and oxygen in combination and an amorphous compound (SiO_{y}C_{z}, provided that, 0<y≤3 and 0<z≤3) containing silicon, oxygen, and carbon in combination, was formed on the surface of the silicon carbide particles, and the silver fine particle was coated with the oxide layer. In addition, as is the case with Example 6, from the FE-TEM image, it was discovered that the oxide layer was an amorphous substance.

In addition, the average pore size of the porous film was 0.30 µm, and the average porosity was 71%.

The oxygen desorption temperature by H₂-TPR was 335°C, and the PM combustion temperature was 300°C.

These results are collectively shown in Table 3.

### [Example 8]

15 g of silicon carbide particles having an average primary particle size of 0.015 µm was added to a dispersion medium in which ammonium polycarboxylate as a surfactant and a deforming agent were dissolved in 80 g of pure water, and in this state, a dispersion treatment using zirconia beads as a dispersive medium was performed for 180 minutes.

An aqueous solution of dinitro-platinate was added to the resultant slurry, which was obtained, in such a manner that platinum became 0.05 g on the basis of 1 g of silicon carbide particles, and a dispersion treatment using zirconia beads as the dispersive medium was performed again for 30 minutes. Then, evaporation and drying were performed to prepare platinum-salt-carrying silicon carbide particles.

Next, the platinum-salt-carrying silicon carbide particles were subjected to a heat treatment under the following conditions. In addition, a first step corresponds to a drying process.

First step: temperature = 120°C, retention time = 24 hours, and atmosphere = air

Second step: temperature = 600°C, retention time = 90 minutes, and atmosphere = argon

Third step: temperature = 700°C, retention time = 60 minutes, and atmosphere = air

Through this heat treatment, formation of platinum (noble metal) fine particles by reduction and decomposition of dinitro-platinate carried on the surface of the silicon carbide particles, and formation of a surface oxide layer of the silicon carbide particles were performed, thereby preparing noble-metal-carrying silicon carbide particles in which the oxide layer was formed.

Next, the noble-metal-carrying silicon carbide particles in which the oxide layer was formed, water, and gelatin used as a gelating agent were weighed in content ratios of 6.0% by volume, 93.0% by volume, and 1.0% by volume. Next, the noble-metal-carrying silicon carbide particles in which the oxide layer was formed and water were mixed with a ball mill using a resin ball including an iron core at a rotation speed of 220 rpm for 48 hours to obtain a dispersion liquid. Then, the gelatin was added to the dispersion liquid that was obtained and mixing was performed for 20 minutes to obtain a silicon carbide particle dispersion liquid (application liquid) of Example 8.

Next, a honeycomb-structured base material formed from silicon carbide was immersed in the silicon carbide particle dispersion liquid. Then, the base material was pulled up, and was dried at 100°C for 12 hours, thereby forming a coated film, which was formed from the noble-metal-carrying silicon carbide particles in which the oxide layer was formed, on the base material.

Next, the base material on which the coated film was formed was subjected to a heat treatment under the following conditions.

First step: temperature = 1000°C, retention time = 30 minutes, and atmosphere = argon

Second step: temperature = 700°C, retention time = 12 hours, and atmosphere = air

Through this heat treatment, formation of a porous film by partial sintering of the silicon carbide particles, and formation of a surface oxide layer of the silicon carbide particles were performed, thereby preparing a filter base body of Example 8.

In the filter base body that was obtained, a porous film formed from the silicon carbide particles was formed on the honeycomb base material, and a platinum fine particle having an average primary particle size of 10 nm was carried on the surface of the silicon carbide particles. Further, an oxide layer, which was formed from an amorphous compound (SiOₓ, provided that, 0<x≤3) containing silicon and oxygen in combination and an amorphous compound (SiO_{y}C_{z}, provided that, 0<y≤3 and 0<z≤3) containing silicon, oxygen, and carbon in combination, was formed on the surface of the silicon carbide particles, and the platinum fine particle was coated with the oxide layer. In addition, as is the case with Example 6, from the FE-TEM image, it was discovered that the oxide layer was an amorphous substance.

In addition, the average pore size of the porous film was 0.08 µm, and the average porosity was 89%.

In addition, the PM combustion temperature was 450°C. These results are collectively shown in Table 3.

### [Example 9]

15 g of silicon carbide particles having an average primary particle size of 0.04 µm was added to a dispersion medium in which ammonium polycarboxylate as a surfactant and a deforming agent were dissolved in 80 g of pure water, and in this state, a dispersion treatment using zirconia beads as a dispersive medium was performed for 180 minutes.

An aqueous solution of silver nitrate was added to the resultant slurry, which was obtained, in such a manner that silver became 0.01 g on the basis of 1 g of silicon carbide particles, and a dispersion treatment using zirconia beads as the dispersive medium was performed again for 30 minutes. Then, evaporation and drying were performed to prepare silver-salt-carrying silicon carbide particles.

Next, the silver-salt-carrying silicon carbide particles were subjected to a heat treatment under the following conditions. In addition, a first step corresponds to a drying process.

First step: temperature = 120°C, retention time = 24 hours, and atmosphere = air

Second step: temperature = 600°C, retention time = 90 minutes, and atmosphere = argon

Third step: temperature = 700°C, retention time = 60 minutes, and atmosphere = air

Through this heat treatment, formation of silver (noble metal) fine particles by reduction and decomposition of silver nitrate carried on the surface of the silicon carbide particles, and formation of a surface oxide layer of the silicon carbide particles were performed, thereby preparing noble-metal-carrying silicon carbide particles in which the oxide layer was formed.

Next, the noble-metal-carrying silicon carbide particles in which the oxide layer was formed, water, and gelatin used as a gelating agent were weighed in content ratios of 22% by volume, 75.5% by volume, and 2.5% by volume. Next, the noble-metal-carrying silicon carbide particles in which the oxide layer was formed and water were mixed with a ball mill using a resin ball including an iron core at a rotation speed of 220 rpm for 48 hours to obtain a dispersion liquid. Then, the gelatin was added to the dispersion liquid that was obtained and mixing was performed for 20 minutes to obtain a silicon carbide particle dispersion liquid (application liquid) of Example 9.

Next, a honeycomb-structured base material formed from silicon carbide was immersed in the silicon carbide particle dispersion liquid. Then, the base material was pulled up, and was dried at 100°C for 12 hours, thereby forming a coated film, which was formed from the noble-metal-carrying silicon carbide particles in which the oxide layer was formed, on the base material.

Next, the base material on which the coated film was formed was subjected to a heat treatment under the following conditions.

First step: temperature = 900°C, retention time = 120 minutes, and atmosphere = argon

Second step: temperature = 600°C, retention time = 24 hours, and atmosphere = air

Through this heat treatment, formation of a porous film by partial sintering of the silicon carbide particles, and formation of a surface oxide layer of the silicon carbide particles were performed, thereby preparing a filter base body of Example 9.

In the filter base body that was obtained, a porous film formed from the silicon carbide particles was formed on the honeycomb base material, and a silver fine particle having an average primary particle size of 30 nm was carried on the surface of the silicon carbide particles. Further, an oxide layer, which was formed from an amorphous compound (SiOₓ, provided that, 0<x≤3) containing silicon and oxygen in combination and an amorphous compound (SiO_{y}C_{z}, provided that, 0<y≤3 and 0<z≤3) containing silicon, oxygen, and carbon in combination, was formed on the surface of the silicon carbide particles, and the silver fine particle was coated with the oxide layer. In addition, as is the case with Example 6, from the FE-TEM image, it was discovered that the oxide layer was an amorphous substance.

In addition, the average pore size of the porous film was 0.2 µm, and the average porosity was 62%.

In addition, the PM combustion temperature was 410°C.

These results are collectively shown in Table 3.

### [Example 10]

15 g of silicon carbide particles having an average primary particle size of 0.030 µm was added to a dispersion medium in which ammonium polycarboxylate as a surfactant and a deforming agent were dissolved in 80 g of pure water, and in this state, a dispersion treatment using zirconia beads as a dispersive medium was performed for 180 minutes.

An aqueous solution of dinitro-platinate was added to the resultant slurry, which was obtained, in such a manner that platinum became 0.1 g on the basis of 1 g of silicon carbide particles, and a dispersion treatment using zirconia beads as the dispersive medium was performed again for 30 minutes, thereby obtaining a slurry.

Silicon carbide particles having an average primary particle size of 0.8 µm were added to the slurry that was obtained, thereby preparing a mixed liquid in which an amount of platinum was adjusted to be 0.01 g on the basis of 1 g of the silicon carbide particles in the slurry.

Water and gelatin were added to the mixed liquid in such a manner that the content ratio of the silicon carbide particles became 20.5% by volume, the content ratio of water became 77.5% by volume, and the content ratio of gelatin used as a gelating agent became 2.5% by volume, thereby adjusting a silicon carbide particle dispersion liquid of Example 10. First, ammonium polycarboxylate as a surfactant was added to the mixed liquid, water in an amount needed to realize the above-described ratio was added to the mixed liquid, and then the resultant mixture was mixed with a ball mill using a resin ball including an iron core at a rotation speed of 220 rpm for 48 hours to obtain a dispersion liquid. Next, gelatin was added to the dispersion liquid in an amount needed to realize the above-described ratio, and then mixing was performed for 20 minutes, thereby obtaining a silicon carbide particle dispersion liquid (application liquid) of Example 10.

Next, a honeycomb-structured base material formed from silicon carbide was immersed in the silicon carbide particle dispersion liquid. Then, the base material was pulled up, and was dried at 100°C for 12 hours, thereby forming a coated film, which was formed from the platinum-salt-carrying silicon carbide particles, on the base material.

Next, the base material on which the coated film was formed was subjected to a heat treatment under the following conditions.

First step: temperature = 900°C, retention time = 120 minutes, and atmosphere = argon

Second step: temperature = 600°C, retention time = 480 minutes, and atmosphere = air

Through this heat treatment, formation of a porous film by partial sintering of the silicon carbide particles, formation of platinum (noble metal) fine particles by reduction and decomposition of dinitro-platinate carried on the surface of the silicon carbide particles, and formation of a surface oxide layer of the silicon carbide particles were performed, thereby preparing a filter base body of Example 10.

In the filter base body that was obtained, the porous film formed from the silicon carbide particles was formed on the honeycomb base material, and a platinum fine particle having an average primary particle size of 5 nm was carried on the surface of the silicon carbide particles. Further, an oxide layer, which was formed from an amorphous compound (SiOₓ, provided that, 0<x≤3) containing silicon and oxygen in combination and an amorphous compound (SiO_{y}C_{z}, provided that, 0<y≤3 and 0<z≤3) containing silicon, oxygen, and carbon in combination, was formed on the surface of the silicon carbide particles, and the platinum fine particle was coated with the oxide layer. In addition, as is the case with Example 6, from the FE-TEM image, it was discovered that the oxide layer was an amorphous substance.

In addition, the average pore size of the porous film was 1.0 µm, and the average porosity was 68%.

The oxygen desorption temperature by TDS was 721°C, and the PM combustion temperature was 430°C.

These results are collectively shown in Table 3.

### [Example 11]

15 g of silicon carbide particles having an average primary particle size of 0.06 µm was added to a dispersion medium in which ammonium polycarboxylate as a surfactant and a deforming agent were dissolved in 80 g of pure water, and in this state, a dispersion treatment using zirconia beads as a dispersive medium was performed for 180 minutes.

An aqueous solution of palladium nitrate was added to the resultant slurry, which was obtained, in such a manner that palladium became 0.1 g on the basis of 1 g of silicon carbide particles, and a dispersion treatment using zirconia beads as the dispersive medium was performed again for 30 minutes, thereby obtaining a slurry.

Silicon carbide particles having an average primary particle size of 5. 0 µm were added to the slurry that was obtained, thereby preparing a mixed liquid in which an amount of palladium was adjusted to be 0.01 g on the basis of 1 g of the silicon carbide particles in the slurry.

Water and gelatin were added to the mixed liquid in such a manner that the content ratio of the silicon carbide particles became 35.0% by volume, the content ratio of water became 63.5% by volume, and the content ratio of gelatin used as a gelating agent became 1.5% by volume, thereby adjusting a silicon carbide particle dispersion liquid of Example 11. First, ammonium polycarboxylate as a surfactant was added to the mixed liquid, water in an amount needed to realize the above-described ratio was added to the mixed liquid, and then the resultant mixture was mixed with a ball mill using a resin ball including an iron core at a rotation speed of 220 rpm for 48 hours to obtain a dispersion liquid. Next, gelatin was added to the dispersion liquid in an amount needed to realize the above-described ratio, and then mixing was performed for 20 minutes, thereby obtaining a silicon carbide particle dispersion liquid (application liquid) of Example 11.

Next, a honeycomb-structured base material formed from silicon carbide was immersed in the silicon carbide particle dispersion liquid. Then, the base material was pulled up, and was dried at 100°C for 12 hours, thereby forming a coated film formed from the palladium-salt-carrying silicon carbide particles on the base material.

Next, the base material on which the coated film was formed was subjected to a heat treatment under the following conditions.

First step: temperature = 850°C, retention time = 240 minutes, and atmosphere = argon

Second step: temperature = 800°C, retention time = 360 minutes, and atmosphere = air

Through this heat treatment, formation of a porous film by partial sintering of the silicon carbide particles, formation of palladium (noble metal) fine particles by reduction and decomposition of palladium nitrate carried on the surface of the silicon carbide particles, and formation of a surface oxide layer of the silicon carbide particles were performed, thereby preparing a filter base body of Example 11.

In the filter base body that was obtained, a porous film formed from the silicon carbide particles was formed on the honeycomb base material, and a palladium fine particle having an average primary particle size of 20 nm was carried on the surface of the silicon carbide particles. Further, an oxide layer, which was formed from an amorphous compound (SiOₓ, provided that, 0<x≤3) containing silicon and oxygen in combination and an amorphous compound (SiO_{y}C_{z}, provided that, 0<y≤3 and 0<z≤3) containing silicon, oxygen, and carbon in combination, was formed on the surface of the silicon carbide particles, and the palladium fine particle was coated with the oxide layer. In addition, as is the case with Example 6, from the FE-TEM image, it was discovered that the oxide layer was an amorphous substance.

In addition, the average pore size of the porous film was 2.0 µm, and the average porosity was 55%.

The oxygen desorption temperature by H₂-TPR was 498°C, and the PM combustion temperature was 470°C.

These results are collectively shown in Table 3.

### [Example 12]

15 g of silicon carbide particles having an average primary particle size of 0.030 µm was added to a dispersion medium in which ammonium polycarboxylate as a surfactant and a deforming agent were dissolved in 80 g of pure water, and in this state, a dispersion treatment using zirconia beads as a dispersive medium was performed for 180 minutes.

An aqueous solution of dinitro-platinate was added to the resultant slurry, which was obtained, in such a manner that platinum became 0.1 g on the basis of 1 g of silicon carbide particles, and a dispersion treatment using zirconia beads as the dispersive medium was performed again for 30 minutes, thereby obtaining slurry.

Silicon carbide particles having an average primary particle size of 10.0 µm were added to the slurry that was obtained, thereby preparing a mixed liquid in which an amount of platinum was adjusted to be 0.005 g on the basis of 1 g of the silicon carbide particles in the slurry.

Water and gelatin were added to the mixed liquid in such a manner that the content ratio of the silicon carbide particles became 30.0% by volume, the content ratio of water became 67.5% by volume, and the content ratio of gelatin used as a gelating agent became 2.5% by volume, thereby adjusting a silicon carbide particle dispersion liquid of Example 12. First, ammonium polycarboxylate as a surfactant was added to the mixed liquid, water in an amount needed to realize the above-described ratio was added to the mixed liquid, and then the resultant mixture was mixed with a ball mill using a resin ball including an iron core at a rotation speed of 220 rpm for 48 hours to obtain a dispersion liquid. Next, gelatin was added to the dispersion liquid in an amount needed to realize the above-described ratio, and then mixing was performed for 20 minutes, thereby obtaining a silicon carbide particle dispersion liquid (application liquid) of Example 12.

Next, a honeycomb-structured base material formed from silicon carbide was immersed in the silicon carbide particle dispersion liquid. Then, the base material was pulled up, and was dried at 100°C for 12 hours, thereby forming a coated film formed from the platinum-salt-carrying silicon carbide particles on the base material.

Next, the base material on which the coated film was formed was subjected to a heat treatment under the following conditions.

First step: temperature = 1000°C, retention time = 120 minutes, and atmosphere = argon

Second step: temperature = 730°C, retention time = 60 minutes, and atmosphere = air

Through this heat treatment, formation of a porous film by partial sintering of the silicon carbide particles, formation of platinum (noble metal) fine particles by reduction and decomposition of dinitro-platinate carried on the surface of the silicon carbide particles, and formation of a surface oxide layer of the silicon carbide particles were performed, thereby preparing a filter base body of Example 12.

In the filter base body that was obtained, the porous film formed from the silicon carbide particles was formed on the honeycomb base material, and a platinum fine particle having an average primary particle size of 1 nm was carried on the surface of the silicon carbide particles. Further, an oxide layer, which was formed from an amorphous compound (SiOₓ, provided that, 0<x≤3) containing silicon and oxygen in combination and an amorphous compound (SiO_{y}C_{z}, provided that, 0<y≤3 and 0<z≤3) containing silicon, oxygen, and carbon in combination, was formed on the surface of the silicon carbide particles, and the platinum fine particle was coated with the oxide layer. In addition, as is the case with Example 6, from the FE-TEM image, it was discovered that the oxide layer was an amorphous substance.

In addition, the average pore size of the porous film was 3.0 µm, and the average porosity was 51%.

In addition, the PM combustion temperature was 500°C.

These results are collectively shown in Table 3.

### [Comparative Example 4]

15 g of silicon carbide particles having an average primary particle size of 0.035 µm was added to a dispersion medium in which ammonium polycarboxylate as a surfactant and a deforming agent were dissolved in 80 g of pure water, and in this state, a dispersion treatment using zirconia beads as a dispersive medium was performed for 180 minutes.

An aqueous solution of dinitro-platinate was added to the resultant slurry, which was obtained, in such a manner that platinum became 0.01 g on the basis of 1 g of silicon carbide particles, and a dispersion treatment using zirconia beads as the dispersive medium was performed again for 30 minutes. Then, evaporation and drying were performed to prepare platinum-salt-carrying silicon carbide particles.

Next, the platinum-salt-carrying silicon carbide particles, water, and gelatin used as a gelating agent were weighed in content ratios of 10.0% by volume, 87.5% by volume, and 2.5% by volume. Next, the platinum-salt-carrying silicon carbide particles and water were mixed with a ball mill using a resin ball including an iron core at a rotation speed of 220 rpm for 12 hours to obtain a dispersion liquid. Then, the gelatin was added to the dispersion liquid that was obtained and mixing was performed for 20 minutes to obtain a silicon carbide particle dispersion liquid (application liquid) of Comparative Example 4.

Next, a honeycomb-structured base material formed from silicon carbide was immersed in the silicon carbide particle dispersion liquid. Then, the base material was pulled up, and was dried at 100°C for 12 hours, thereby forming a coated film formed from the platinum-salt-carrying silicon carbide particles on the base material.

Next, the base material on which the coated film was formed was subjected to a heat treatment under the following conditions, thereby preparing a filter base body of Comparative Example 4.

First step: temperature = 980°C, retention time = 70 minutes, and atmosphere = argon

Second step: temperature = 450°C, retention time = 30 minutes, and atmosphere = air

In the filter base body that was obtained, the porous film formed from the silicon carbide particles was formed on the honeycomb base material, and a platinum fine particle having an average primary particle size of 1 nm was carried on the surface of the silicon carbide particles. Further, an oxide layer was not formed on the surface of the silicon carbide particles, and thus the platinum fine particle was not also coated with the oxide layer.

In addition, the average pore size of the porous film was 0.05 µm, and the average porosity was 73%.

In addition, the PM combustion temperature was 590°C.

These results are collectively shown in Table 3.

### [Comparative Example 5]

15 g of silicon carbide particles having an average primary particle size of 0.04 µm was added to a dispersion medium in which ammonium polycarboxylate as a surfactant and a deforming agent were dissolved in 80 g of pure water, and in this state, a dispersion treatment using zirconia beads as a dispersive medium was performed for 180 minutes.

An aqueous solution of dinitro-platinate was added to the resultant slurry, which was obtained, in such a manner that platinum became 0.05 g on the basis of 1 g of silicon carbide particles, and a dispersion treatment using zirconia beads as the dispersive medium was performed again for 30 minutes. Then, evaporation and drying were performed to prepare platinum-salt-carrying silicon carbide particles.

Next, the platinum-salt-carrying silicon carbide particles were subjected to a heat treatment under the following conditions. Through the heat treatment, formation of platinum (noble metal) fine particles by reduction and decomposition of dinitro-platinate carried on the surface of the silicon carbide particles was performed, thereby forming the noble-metal-carrying silicon carbide particles. In addition, a first step corresponds to a drying process.

First step: temperature = 120°C, retention time = 24 hours, and atmosphere = air

Second step: temperature = 1000°C, retention time = 30 minutes, and atmosphere = argon

Third step: temperature = 450°C, retention time = 240 minutes, and atmosphere = air

Next, the noble-metal-carrying silicon carbide particles, water, and gelatin used as a gelating agent were weighed in content ratios of 23.0% by volume, 76.0% by volume, and 1.0% by volume. Next, the noble-metal-carrying silicon carbide particles and water were mixed with a ball mill using a resin ball including an iron core at a rotation speed of 220 rpm for 48 hours to obtain a dispersion liquid. Then, the gelatin was added to the dispersion liquid that was obtained and mixing was performed for 20 minutes to obtain a silicon carbide particle dispersion liquid (application liquid) of Comparative Example 5.

Next, a honeycomb-structured base material formed from silicon carbide was immersed in the silicon carbide particle dispersion liquid. Then, the base material was pulled up, and was dried at 100°C for 12 hours, thereby forming a coated film formed from the noble-metal-carrying silicon carbide particles on the base material.

Next, the base material on which the coated film was formed was subjected to a heat treatment under the following conditions, thereby preparing a filter base body of Comparative Example 5.

First step: temperature = 1000°C, retention time = 30 minutes, and atmosphere = argon

Second step: temperature = 550°C, retention time = 120 minutes, and atmosphere = air

In the filter base body that was obtained, the porous film formed from the silicon carbide particles was formed on the honeycomb base material, and a platinum fine particle having an average primary particle size of 1.5 nm was carried on the surface of the silicon carbide particles. Further, an oxide layer was not formed on the surface of the silicon carbide particles, and thus the platinum fine particle was not also coated with the oxide layer.

In addition, the average pore size of the porous film was 0.04 µm, and the average porosity was 68%.

In addition, the PM combustion temperature was 600°C.

These results are collectively shown in Table 3.

### [Comparative Example 6]

15 g of silicon carbide particles having an average primary particle size of 0.030 µm was added to a dispersion medium in which ammonium polycarboxylate as a surfactant and a deforming agent were dissolved in 80 g of pure water, and in this state, a dispersion treatment using zirconia beads as a dispersive medium was performed for 180 minutes.

An aqueous solution of dinitro-platinate was added to the resultant slurry, which was obtained, in such a manner that platinum became 0.1 g on the basis of 1 g of silicon carbide particles, and a dispersion treatment using zirconia beads as the dispersive medium was performed again for 30 minutes, thereby obtaining a slurry.

Silicon carbide particles having an average primary particle size of 10.0 µm were added to the slurry that was obtained, thereby preparing a mixed liquid in which an amount of platinum was adjusted to be 0.005 g on the basis of 1 g of the silicon carbide particles in the slurry.

Water and gelatin were added to the mixed liquid in such a manner that the content ratio of the silicon carbide particles became 30.0% by volume, the content ratio of water became 67.5% by volume, and the content ratio of gelatin used as a gelating agent became 2.5% by volume, thereby adjusting a silicon carbide particle dispersion liquid of Comparative Example 6. First, ammonium polycarboxylate as a surfactant was added to the mixed liquid, water in an amount needed to realize the above-described ratio was added to the mixed liquid, and then the resultant mixture was mixed with a ball mill using a resin ball including an iron core at a rotation speed of 220 rpm for 48 hours to obtain a dispersion liquid. Next, gelatin was added to the dispersion liquid in an amount needed to realize the above-described ratio, and then mixing was performed for 20 minutes, thereby obtaining a silicon carbide particle dispersion liquid (application liquid) of Comparative Example 6.

Next, a honeycomb-structured base material formed from silicon carbide was immersed in the silicon carbide particle dispersion liquid. Then, the base material was pulled up, and was dried at 100°C for 12 hours, thereby forming a coated film formed from the platinum-salt-carrying silicon carbide particles on the base material.

Next, the base material on which the coated film was formed was subjected to a heat treatment under the following conditions, thereby preparing a filter base body of Comparative Example 6.

First step: temperature = 1000°C, retention time = 360 minutes, and atmosphere = argon

Second step: temperature = 500°C, retention time = 360 minutes, and atmosphere = air

In the filter base body that was obtained, the porous film formed from the silicon carbide particles was formed on the honeycomb base material, and a platinum fine particle having an average primary particle size of 3 nm was carried on the surface of the silicon carbide particles. Further, an oxide layer was not formed on the surface of the silicon carbide particles, and thus the platinum fine particle was not also coated with the oxide layer.

In addition, the average pore size of the porous film was 3.0 µm, and the average porosity was 51%.

In addition, the PM combustion temperature was 620°C.

These results are collectively shown in Table 3.

### [Comparative Example 7]

15 g of silicon carbide particles having an average primary particle size of 0.04 µm was added to a dispersion medium in which ammonium polycarboxylate as a surfactant and a deforming agent were dissolved in 80 g of pure water, and in this state, a dispersion treatment using zirconia beads as a dispersive medium was performed for 180 minutes.

An aqueous solution of silver nitrate was added to the resultant slurry, which was obtained, in such a manner that silver became 0.01 g on the basis of 1 g of silicon carbide particles, and a dispersion treatment using zirconia beads as the dispersive medium was performed again for 30 minutes. Then, evaporation and drying were performed to prepare silver-salt-carrying silicon carbide particles.

Next, the silver-salt-carrying silicon carbide particles were subjected to a heat treatment under the following conditions, and formation of silver (noble metal) fine particle by reduction and decomposition of silver nitrate carried on the surface of the silicon carbide particles was carried out, thereby forming noble-metal-carrying silicon carbide particles. In addition, a first step corresponds to a drying process.

First step: temperature = 120°C, retention time = 24 hours, and atmosphere = air

Second step: temperature = 650°C, retention time = 90 minutes, and atmosphere = argon

Third step: temperature = 450°C, retention time = 60 minutes, and atmosphere = air

Next, the noble-metal-carrying silicon carbide particles, water, and gelatin used as a gelating agent were weighed in content ratios of 31.5% by volume, 66.0% by volume, and 2.5% by volume. Next, the noble-metal-carrying silicon carbide particles and water were mixed with a ball mill using a resin ball including an iron core at a rotation speed of 220 rpm for 48 hours to obtain a dispersion liquid. Then, the gelatin was added to the dispersion liquid that was obtained and mixing was performed for 20 minutes to obtain a silicon carbide particle dispersion liquid (application liquid) of Comparative Example 7.

Next, a honeycomb-structured base material formed from silicon carbide was immersed in the silicon carbide particle dispersion liquid. Then, the base material was pulled up, and was dried at 100°C for 12 hours, thereby forming an applied and dried film formed from the noble-metal-carrying silicon carbide particles on the base material.

Next, the base material on which the applied and dried film was formed was subjected to a heat treatment under the following conditions, thereby preparing a filter base body of Comparative Example 7.

First step: temperature = 900°C, retention time = 120 minutes, and atmosphere = argon

Second step: temperature = 520°C, retention time = 90 minutes, and atmosphere = air

In the filter base body that was obtained, the porous film formed from the silicon carbide particles was formed on the honeycomb base material, and a silver fine particle having an average primary particle size of 10 nm was carried on the surface of the silicon carbide particles. Further, an oxide layer was not formed on the surface of the silicon carbide particles, and thus the silver fine particle was not also coated with the oxide layer.

In addition, the average pore size of the porous film was 0.5 µm, and the average porosity was 58%.

In addition, the PM combustion temperature was 570°C.

These results are collectively shown in Table 3.

### [Comparative Example 8]

15 g of silicon carbide particles having an average primary particle size of 0.035 µm was added to a dispersion medium in which ammonium polycarboxylate as a surfactant and a deforming agent were dissolved in 80 g of pure water, and in this state, a dispersion treatment using zirconia beads as a dispersive medium was performed for 180 minutes.

The slurry that was obtained was evaporated and dried, thereby preparing a surface-treated silicon carbide particles.

Next, the surface-treated silicon carbide particles, water, and gelatin used as a gelating agent were weighed in content ratios of 10.0% by volume, 87.5% by volume, and 2.5% by volume. Next, the surface-treated silicon carbide particles and water were mixed with a ball mill using a resin ball including an iron core at a rotation speed of 220 rpm for 12 hours to obtain a dispersion liquid. Then, the gelatin was added to the dispersion liquid that was obtained and mixing was performed for 20 minutes to obtain a silicon carbide particle dispersion liquid (application liquid) of Comparative Example 8.

Next, a honeycomb-structured base material formed from silicon carbide was immersed in the silicon carbide particle dispersion liquid. Then, the base material was pulled up, and was dried at 100°C for 12 hours, thereby forming a coated film formed from the silicon carbide particles on the base material.

Next, the base material on which the coated film was formed was subjected to a heat treatment under the following conditions.

First step: temperature = 980°C, retention time = 80 minutes, and atmosphere = argon

Second step: temperature = 730°C, retention time = 360 minutes, and atmosphere = air

Through this heat treatment, a filter base body of Comparative Example 8, in which a porous film was formed by partial sintering of the silicon carbide particles and an oxide layer was formed on the surface of the silicon carbide particles, was prepared.

In the filter base body that was obtained, a porous film formed from the silicon carbide particles was formed on the honeycomb base material. Further, an oxide layer, which was formed from an amorphous compound (SiOₓ, provided that, 0<x≤3) containing silicon and oxygen in combination and an amorphous compound (SiO_{y}C_{z}, provided that, 0<y≤3 and 0<z≤3) containing silicon, oxygen, and carbon in combination, was formed on the surface of the silicon carbide particles. In addition, as is the case with Example 6, from the FE-TEM image, it was discovered that the oxide layer was an amorphous substance.

In addition, the average pore size of the porous film was 0.1 µm, and the average porosity was 75%.

The oxygen desorption temperature by H₂-TPR was 453°C, and the PM combustion temperature was 500°C.

These results are collectively shown in Table 3.

### [Comparative Example 9]

15 g of silicon carbide particles having an average primary particle size of 0.030 µm was added to a dispersion medium in which ammonium polycarboxylate as a surfactant and a deforming agent were dissolved in 80 g of pure water, and in this state, a dispersion treatment using zirconia beads as a dispersive medium was performed for 180 minutes.

135 g of silicon carbide particles having an average primary particle size of 0.8 µm was added to the slurry that was obtained, and mixing was performed, thereby preparing a mixed liquid.

Water and gelatin were added to the mixed liquid in such a manner that the content ratio of the silicon carbide particles became 20.5% by volume, the content ratio of water became 77.5% by volume, and the content ratio of gelatin used as a gelating agent became 2.5% by volume, thereby adjusting a silicon carbide particle dispersion liquid of Comparative Example 9.

First, ammonium polycarboxylate as a surfactant was added to the mixed liquid, water in an amount needed to realize the above-described ratio was added to the mixed liquid, and then the resultant mixture was mixed with a ball mill using a resin ball including an iron core at a rotation speed of 220 rpm for 48 hours to obtain a dispersion liquid. Next, gelatin was added to the dispersion liquid in an amount needed to realize the above-described ratio, and then mixing was performed for 20 minutes, thereby obtaining a silicon carbide particle dispersion liquid (application liquid) of Comparative Example 9.

Next, a honeycomb-structured base material formed from silicon carbide was immersed in the silicon carbide particle dispersion liquid. Then, the base material was pulled up, and was dried at 100°C for 12 hours, thereby forming a coated film formed from the silicon carbide particles on the base material.

Next, the base material on which the coated film was formed was subjected to a heat treatment under the following conditions.

First step: temperature = 900°C, retention time = 120 minutes, and atmosphere = argon

Second step: temperature = 600°C, retention time = 480 minutes, and atmosphere = air

Through this heat treatment, a filter base body of Comparative Example 9, in which a porous film was formed by partial sintering of the silicon carbide particles and an oxide layer was formed on the surface of the silicon carbide particles, was prepared.

In the filter base body that was obtained, a porous film formed from the silicon carbide particles was formed on the honeycomb base material. Further, an oxide layer, which was formed from an amorphous compound (SiOₓ, provided that, 0<x≤3) containing silicon and oxygen in combination and an amorphous compound (SiO_{y}C_{z}, provided that, 0<y≤3 and 0<z≤3) containing silicon, oxygen, and carbon in combination, was formed on the surface of the silicon carbide particles. In addition, as is the case with Example 6, from the FE-TEM image, it was discovered that the oxide layer was an amorphous substance.

In addition, the average pore size of the porous film was 0.1 µm, and the average porosity was 68%.

The oxygen desorption temperature by TDS was 735°C, and the PM combustion temperature was 550°C.

These results are collectively shown in Table 3.

**[Table 3]**

| | Noble metal | Oxide layer | Particle size of SiC (µm) | Average primary particle size of noble metal (nm) | Average pore size (µm) | Average porosity (%) | Oxygen desorption temperature (°C) | | PM combustion temperature (°C) |
|---|---|---|---|---|---|---|---|---|---|
| | | | | | | | H2-TPR | TDS | |
| Example 6 | Pt | SiOₓ (0<x≤3), | 0.035 | 3 | 0.1 | 75 | 335 | - | 350 |
| | | SiO_{y}C_{z} (0<y≤3, 0<z≤3) | | | | | | | |
| Example 7 | Ag | SiOₓ (0<x≤3), | 0.03 | 50 | 0.3 | 71 | 435 | - | 300 |
| | | SiOₓC_{z} (0<y≤3, 0<z≤3) | | | | | | | |
| Example 8 | Pt | SiOₓ (0<x≤3), | 0.015 | 10 | 0.08 | 89 | - | - | 450 |
| | | SiO_{y}C_{z} (0<y≤3, 0<z≤3) | | | | | | | |
| Example 9 | Ag | SiOₓ (0<x≤3), | 0.04 | 30 | 0.2 | 62 | - | - | 410 |
| | | SiO_{y}C_{z} (0<y≤3, 0<z≤3) | | | | | | | |
| Example 10 | Pt | SiOₓ (0<x≤3), | 0.030 | 5 | 1 | 68 | - | 721 | 430 |
| | | SiO_{y}C_{z} (0<y≤3, 0<z≤3) | 0.08 | | | | | | |
| Example 11 | Pd | SiOₓ (0<x≤3), | 0.06 | 20 | 2 | 55 | 498 | - | 470 |
| | | SiOₓC_{z} (0<y≤3, 0<z≤3) | 5.0 | | | | | | |
| Example 12 | Pt | SiOₓ (0<x≤3), | 0.030 | 1 | 3 | 51 | - | - | 500 |
| | | SiO_{y}C_{z} (0<y≤3, 0<z≤3) | 10 | | | | | | |
| Comparative Example 13 | Pt | Oxide film is not formed | 0.035 | 1 | 0.05 | 73 | - | - | 590 |
| Comparative Example 4 | Pt | Oxide film is not formed | 0.04 | 1.5 | 0.04 | 68 | - | - | 600 |
| Comparative Example 5 | Pt | Oxide film is not formed | 0.030 10 | 3 | 3 | 51 | - | - | 620 |
| Comparative Example 6 | Ag | Oxide film is not formed | 0.04 | 10 | 0.5 | 58 | - | - | 570 |
| Comparative Example 7 | Without | SiOₓ (0<x≤3), | 0.035 | - | 0.1 | 75 | 453 | - | 500 |
| | | SiO_{y}C_{z} (0<y≤3, 0<z≤3) | | | | | | | |
| Comparative Example 8 | Without | SiOₓ (0<x≤3), | 0.030 | - | 1 | 68 | - | 735 | 550 |
| | | SiO_{y}C_{z} (0<y≤3, 0<z≤3) | 0.08 | | | | | | |

As could be seen from the above-described results, in the filter base bodies of Examples 6 to 12, a nanometer-sized noble metal fine particle was carried on the surface of the silicon carbide particles, the oxide layer was formed on the surface of the silicon carbide particles, and the noble metal fine particles were coated with the oxide layer.

The PM combustion temperature in Examples 6 to 12 was as low as 300°C to 500°C, and a sufficient catalytic effect with respect to PM combustion was obtained. In addition, the oxygen desorption temperature by H₂-TPR was also close to the value of the PM combustion temperature, and thus the catalytic effect with respect to the PM combustion was proved. In addition, in Example 7, the oxygen desorption temperature by H₂-TPR was higher in comparison to the PM combustion temperature, but this is considered to be because of an oxygen donating properties of silver with respect to PM are higher in comparison to hydrogen.

On the other hand, in the filter base bodies of Comparative Examples 4 to 7, as is the case with Examples, the nanometer-sized noble metal fine particle were carried on the surface of the silicon carbide particles. However, the oxide layer was not formed on the surface of the silicon carbide particles, and thus the noble metal fine particle carried on the surface of the silicon carbide particles were in an exposed state without being coated with the oxide layer.

In Comparative Examples 4 to 7, the PM combustion temperature was 570°C to 620°C, and was higher by approximately 100°C to 300°C in comparison to Examples, and thus it was proved that a sufficient catalytic effect with respect to the PM combustion was not obtained.

In addition, in the filter base bodies of Comparative Examples 8 and 9, the oxide layer was formed on the surface of the silicon carbide particles, but the noble metal fine particles were not carried.

In the filter base bodies of Comparative Examples 8 and 9, the PM combustion temperature was 500°C to 550°C and was lower in comparison to Comparative Examples 4 to 7. However, the PM combustion temperature was higher by 120°C to 150°C in comparison to Examples 6 and 10, which contained the same silicon carbide particles and contained platinum as a noble metal, and the catalytic effect with respect to the PM combustion was not sufficient.

Further, in Example 10 and Comparative Example 9, the oxygen desorption temperature by TDS was higher in comparison to the PM combustion temperature or the value of the oxygen desorption temperature by H₂-TPR. The reason for the result is considered to be as follows. At the oxygen desorption temperature by TDS, oxygen is only desorbed in the vacuum, but at the oxygen desorption temperature by PM combustion or H₂-TPR, oxygen acceptors (materials to be oxidized) such as PM (carbon) and hydrogen is present, and these materials react with desorbed oxygen. As a result, the desorption of oxygen is simplified.

### Industrial Applicability

The invention is applicable to an exhaust purification catalyst that purifies an exhaust gas discharged from an internal combustion engine, and an exhaust emission control device for an internal combustion engine in which the exhaust purification catalyst is disposed in an exhaust passage of the internal combustion engine, and more particularly, to an exhaust purification catalyst that efficiently purifies carbon monoxide (CO), hydrocarbon (HC), nitrogen oxide (NOx), particulate matter (PM), and the like which are contained in an exhaust gas discharged from the internal combustion engine of an engine and the like, and an exhaust emission control device for the internal combustion engine in which the exhaust purification catalyst is disposed in the exhaust passage.

In addition, the invention is also applicable to an exhaust gas purification filter that is very suitable for removing the particulate matter from the exhaust gas discharged from an diesel engine of a vehicle and the like, and more particularly, to an exhaust gas purification filter which prevents an increase in pressure loss while improving particulate matter trapping properties, and which lowers a combustion temperature of the particulate matter during regeneration of the filter, thereby realizing improvement in durability and continuous regeneration of the filter.

### Reference Signs List

1: Noble-metal-carrying silicon carbide particle
2: Silicon carbide particle
3: Noble metal particle
4: oxide layer
11: Exhaust emission control device
12: Tubular exhaust passage
13: Honeycomb base material
14: Bottle
15: Heating furnace
20: Porous film
21a, 21b: Noble-metal-carrying silicon carbide particle
22: Silicon carbide particle
23: Noble metal particle
24: Oxide layer
25: Surface-coated silicon carbide particle
G: (Simulated) exhaust gas
100: Exhaust gas purification filter
111: Filter base body
112: Gas flow passage
112A: Inflow cell
112B: Outflow cell
113: Porous film
114: Partition wall
121a, 121b: Noble-metal-carrying silicon carbide particle
122: Silicon carbide particle
123: Noble metal particle
124: Oxide layer
125: Surface-coated silicon carbide particle
130: Particulate matter
α, γ: End face
C: Purified gas

## Claims

1. An exhaust purification catalyst in which a noble metal particle is carried on a surface of a silicon carbide particle,
wherein the noble metal particle is carried in a state of being coated with an oxide layer.

2. The exhaust purification catalyst according to claim 1,
wherein the oxide layer is formed from one or two compounds selected from a group consisting of amorphous SiOₓ (provided that, 0<x≤3) and amorphous SiO_{y}C_{z} (provided that, 0<y≤3 and 0<z≤3).

3. The exhaust purification catalyst according to claim 2,
wherein the oxide layer further contains one or two or more crystalline substances selected from a group consisting of SiO₂, SiO, SiOC₃, SiO₂C₂, and SiO₃C.

4. The exhaust purification catalyst according to claim 1 or 2,
wherein an average primary particle size of the silicon carbide particle is 0.01 µm to 5 µm.

5. The exhaust purification catalyst according to claim 1 or 2,
wherein an average primary particle size of the noble metal particle is 1 nm to 50 nm.

6. An exhaust emission control device for an internal combustion engine, which purifies an exhaust gas discharged from an internal combustion engine by using a catalyst disposed in an exhaust passage of the internal combustion engine,
wherein at least one catalyst is the exhaust purification catalyst according to claim 1 or 2.

7. An exhaust gas purification filter which purifies an exhaust gas by allowing particulate matter contained in the exhaust gas to pass through a filter base body formed from a porous substance to trap the particulate matter,
wherein the filter base body includes,
a partition wall that is formed from a porous substance;
an inflow-side gas flow passage which is formed by the partition wall and in which an inflow-side end for an exhaust gas that contains particulate matter is opened; and
an outflow-side gas flow passage which is provided at a position different from that of the inflow-side gas flow passage of the filter base body and is formed by the partition wall and in which an outflow-side end for the exhaust gas is opened,
wherein a porous film having a pore size smaller than that of the partition wall is formed on a surface of the partition wall at least on an inflow-side gas flow passage side, and
the porous film contains silicon carbide particles and noble metal particles, and the noble metal particles, which are carried on the surface of the silicon carbide particles, are carried in a state of being coated with an oxide layer.

8. The exhaust gas purification filter according to claim 7,
wherein the oxide layer is formed from one or two compounds selected from a group consisting of amorphous SiOₓ (provided that, 0<x≤3) and amorphous SiO_{y}C_{z} (provided that, 0<y≤3 and 0<z≤3).

9. The exhaust gas purification filter according to claim 8,
wherein the oxide layer further contains one or two or more crystalline substances selected from a group consisting of SiO₂, SiO, SiOC₃, SiO₂C₂, and SiO₃C.

10. The exhaust gas purification filter according to claim 7 or 8,
wherein an average primary particle size of the silicon carbide particles is 0.01 µm to 10 µm.

11. The exhaust gas purification filter according to claim 7 or 8,
wherein an average primary particle size of the noble metal particles is 1 nm to 50 nm.

12. The exhaust gas purification filter according to claim 7 or 8,
wherein an average pore size of the porous film is 0.05 µm to 3 µm, and
an average porosity of the porous film is 50% to 90%.
